# EUROPEAN PATENT APPLICATION

(11) **EP 4 575 737 A1**
(43) Date of publication of application: **25.06.2025**
(21) Application number: 24852951.3
(22) Date of filing: 25.10.2024
(51) Int. Cl.: G06F 3/0484, G06F 3/14, G06F 3/041

(54) **ELECTRONIC DEVICE COMPRISING EXTERNAL DISPLAY AND METHOD FOR OPERATING ELECTRONIC DEVICE**

(30) Priority: 25.10.2023 KR 20230144244; 04.01.2024 KR 20240001293; 24.10.2024 KR 20240146956
(71) Applicant: Samsung Electronics Co., Ltd, Suwon-si, Gyeonggi-do 16677 (KR)
(72) Inventor: HEO, Joon, Suwon-si, Gyeonggi-do 16677 (KR); KIM, Yongyoun, Suwon-si, Gyeonggi-do 16677 (KR)
(74) Representative: HGF
(86) International application number: PCT/KR2024/016392
(87) International publication number: WO 2025/089867

(57) **Abstract**

An electronic device according to the disclosure may comprise a first housing, a cover display accommodated in the first housing, a processor, and memory. A first side of the first housing may include a hole region including at least one hole. A cover display may include an active display area visible to an outside of the electronic device through at least a portion of a remaining region other than the hole region of the first side. The active display area may include a first display area and a second display area smaller than the first display area. The electronic device may identify whether a specified condition for a first event associated with multi-view display and display a first view having a first size in the first display area, a second view having a size smaller than the first size in the second display area, and a gap area with a first color between the first view and the second view, based on the specified condition being met.

## Description

### [Technical Field]

The disclosure relates to an electronic device including an external display and an operation method of the electronic device.

### [Background Art]

An electronic device such as a foldable electronic device may further include an external display in addition to an internal main display. The external display may have a maximum size within an expandable range for ease of use.

As the size of the external display increases, various discussions about providing multiple execution screens through one external display are underway. For example, when the external display has an atypical shape such as a notch structure due to another component (e.g., a camera) disposed outside, a method for efficiently providing a plurality of execution screens to the external display needs to be considered.

The above-described information may be provided as related art for the purpose of helping understanding of the disclosure. No claim or determination is made as to whether any of the foregoing is applicable as background art in relation to the disclosure.

### [Disclosure of Invention]

### [Solution to Problems]

An electronic device according to an embodiment of the disclosure may comprise a foldable housing including a first housing and a second housing. A first surface (or, first side) of the first housing may include a hole region including one or more holes. The electronic device may comprise a hinge structure rotatably connecting the first housing and the second housing, e.g. from an unfolded state to a folded state. In other words, the electronic device may comprise a hinge structure (or hinge, hinge assembly, or hinge module) arranged to connect or couple the first housing to the second housing and permit relative movement between the first and second housings to change a configuration of the electronic device between a folded and an unfolded state. The electronic device may comprise a flexible display accommodated in (or on, or by) the first housing and the second housing. The electronic device may comprise a cover display accommodated in (or on, or by) the first housing. The cover display may include an active display area visible from an outside of the electronic device through at least a portion of a remaining region other than a hole region of a first surface. The active display area may include a first display area and a second display area smaller than the first display area. The electronic device may comprise a processor and memory. The memory may store instructions that, when executed by the processor, cause the electronic device to identify whether a specified condition for a first event associated with multi-view display is met. The memory may store instructions that, when executed by the processor, cause the electronic device to, based on the specified condition being met, display a first view having a first size in the first display area, a second view having a second size smaller than the first size in the second display area, and a gap area with a first color between the first view and the second view. In other words, the gap area may separate (e.g. visually) the first view and the second view (and may be described as a separating area, a separator, a separating region, a separating view, or a partition). In doing so, it may enable a user to more efficiently and accurately selectively interact with the first view and/or the second view, provide an improved user interface, reduce input errors, and reduce processing requirements.

An electronic device according to an embodiment of the disclosure may comprise a foldable housing including a first housing and a second housing. A first surface (or, first side) of the first housing may include a hole region including one or more holes. The electronic device may comprise a hinge structure (or hinge, hinge module, or hinge assembly) rotatably connecting the first housing and the second housing, e.g. from an unfolded state to a folded state. The electronic device may comprise a flexible display accommodated in (or on, or by) the first housing and the second housing. The electronic device may comprise a cover display accommodated in (or on, or by) the first housing. The cover display may include an active display area visible from an outside of the electronic device through at least a portion of a remaining region other than a hole region of a first surface. The active display area may include a first display area and a second display area smaller than the first display area. The electronic device may comprise a processor and memory. The processor may identify whether a specified condition for a first event associated with multi-view display is met. The processor may display a first view having a first size in the first display area, a second view having a size smaller than the first size in the second display area, and a gap area with a first color between the first view and the second view, based on the specified condition being met.

According to an embodiment, a method by an electronic device may comprise identifying whether a designated condition for a first event associated with multi-view display is met. The method by the electronic device may comprise displaying a first view having a first size in the first display area, a second view having a size smaller than the first size in the second display area, and a gap area with a first color between the first view and the second view, based on the designated condition being met.

According to an embodiment of the disclosure, in a storage medium storing at least one computer-readable instruction, the at least one instruction, when executed by at least one processor of an electronic device, may enable the electronic device to perform at least one operation. The at least one operation may comprise displaying a first view having a first size in the first display area, a second view having a size smaller than the first size in the second display area, and a gap area with a first color between the first view and the second view, based on the designated condition being met.

### [Brief Description of Drawings]

FIG. 1 is a block diagram illustrating an electronic device in a network environment according to an embodiment of the disclosure;
FIG. 2A is a perspective view illustrating a foldable electronic device in an unfolded state according to an embodiment of the disclosure;
FIG. 2B is a perspective view illustrating a foldable electronic device in a folded state according to an embodiment of the disclosure;
FIG. 3 is an exploded view illustrating a foldable electronic device according to an embodiment of the disclosure;
FIG. 4 is a rear view illustrating a foldable electronic device according to an embodiment of the disclosure;
FIG. 5A is a view illustrating a display of an electronic device according to an embodiment of the disclosure;
FIG. 5B is a view illustrating a display area of a display of an electronic device according to an embodiment of the disclosure;
FIG. 6A is a view illustrating a display mode of an electronic device according to an embodiment of the disclosure;
FIG. 6B is a flowchart illustrating a method for an electronic device to display at least one execution screen according to a display mode according to an embodiment of the disclosure;
FIG. 7 is a view illustrating a method for an electronic device to display a main view and a sub-view together according to an embodiment of the disclosure;
FIG. 8 is a view illustrating a method for an electronic device to display a main view and a sub-view together according to an embodiment of the disclosure;
FIG. 9 is a view illustrating a method for an electronic device to display a sub-view according to an embodiment of the disclosure;
FIG. 10 is a view illustrating a method for an electronic device to display a sub-view according to an embodiment of the disclosure;
FIG. 11 is a view illustrating a method for an electronic device to display a main view according to an embodiment of the disclosure;
FIG. 12 is a view illustrating a method for an electronic device to display a full view according to an embodiment of the disclosure;
FIG. 13 is a flowchart illustrating a method for an electronic device to display at least one execution screen according to an embodiment of the disclosure;
FIG. 14A is a view illustrating a method for an electronic device to switch a display mode from a full display mode to a multi-view display mode based on a user input according to an embodiment of the disclosure;
FIG. 14B is a view illustrating a method for an electronic device to switch a display mode from a full display mode to a multi-view display mode based on a user input according to an embodiment of the disclosure;
FIG. 15 is a flowchart illustrating a method for an electronic device to switch between a main view and a sub-view according to an embodiment of the disclosure;
FIG. 16 is a view illustrating an example of a switching process between a main view and a sub-view according to an embodiment of the disclosure;
FIG. 17 is a flowchart illustrating a method for an electronic device to switch a display mode from a sub display mode to a full display mode based on a user input according to an embodiment of the disclosure;
FIG. 18 is a view illustrating an example of a process of switching from a sub display mode to a full display mode according to an embodiment of the disclosure;
FIG. 19 is a view illustrating an example of a view provided by an electronic device including an extended display according to an embodiment of the disclosure;
FIG. 20 is a view illustrating an example of a main view and a sub-view provided by an electronic device including an extended display according to an embodiment of the disclosure;
FIG. 21 is a view illustrating an example of a main view and a sub-view provided by an electronic device including an extended display according to an embodiment of the disclosure;
FIG. 22 is a view illustrating a display of an electronic device according to an embodiment;
FIGS. 23A, 23B, and 23C are views illustrating a method of displaying a main view and a sub-view together by an electronic device according to an embodiment of the disclosure; and
FIGS. 24A and 24B are views illustrating a method of displaying a main view and a sub-view together by an electronic device according to an embodiment of the disclosure.

### [Mode for the Invention]

Embodiments of the disclosure are now described with reference to the accompanying drawings in such a detailed manner as to be easily practiced by one of ordinary skill in the art. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

It should be appreciated that the blocks in each flowchart and combinations of the flowcharts may be performed by computer program instructions.

Further, each block may represent a module, segment, or part of a code including one or more executable instructions for executing a specified logical function(s). Further, it should also be noted that in some replacement embodiments, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, 'unit' is not limited to software or hardware. A 'unit' may be configured in a storage medium that may be addressed or may be configured to execute one or more packet processing devices. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. Functions provided within the components and the 'units' may be combined into smaller numbers of components and 'units' or further separated into additional components and 'units'. Further, an element or a 'unit' may be implemented to reproduce one or more central processing units (CPUs) in a device or a security multimedia card. According to embodiments, a "...unit" may include one or more packet processing devices.

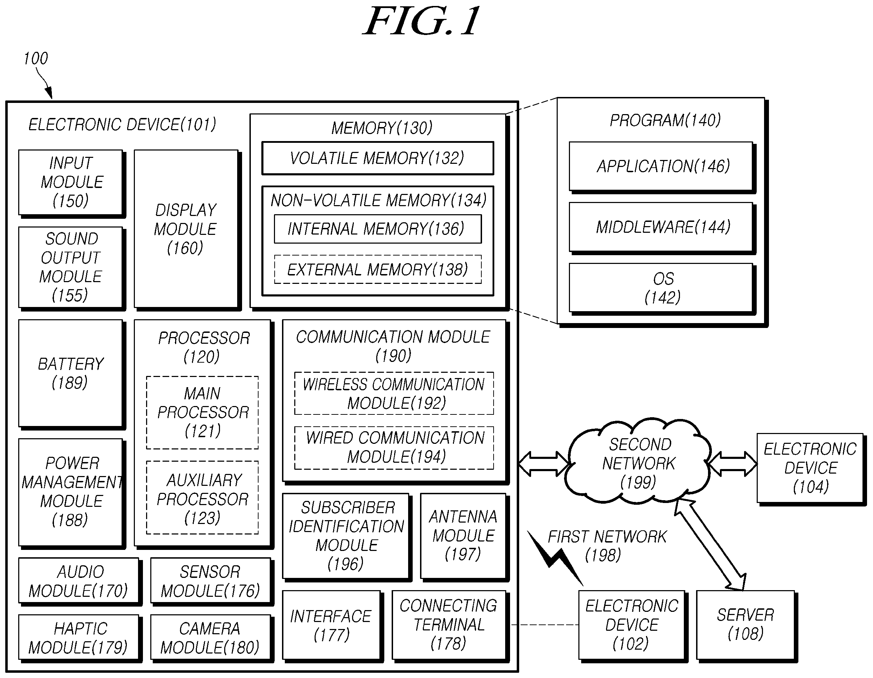

FIG. 1 is a block diagram illustrating an electronic device in a network environment according to an embodiment of the disclosure.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a communication module 192 (e.g., a cellular communication module, a short-range communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The communication module 192 may identify or authenticate the electronic device 101 in a communication network, such as the first network 198 or the second network 199, using subscriber information (e.g., international mobile subscriber identity (IMSI)) stored in the subscriber identification module 196.

The communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The communication module 192 may support a high-frequency band (e.g., the mmWave band) to achieve, e.g., a high data transmission rate. The communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The communication module 192 may support various requirements specified in the electronic device 101, an external electronic device (e.g., the electronic device 104), or a network system (e.g., the second network 199). According to an embodiment, the communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

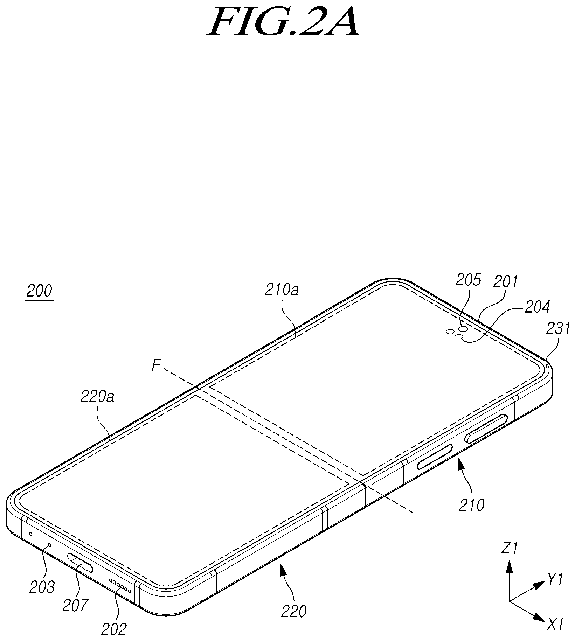

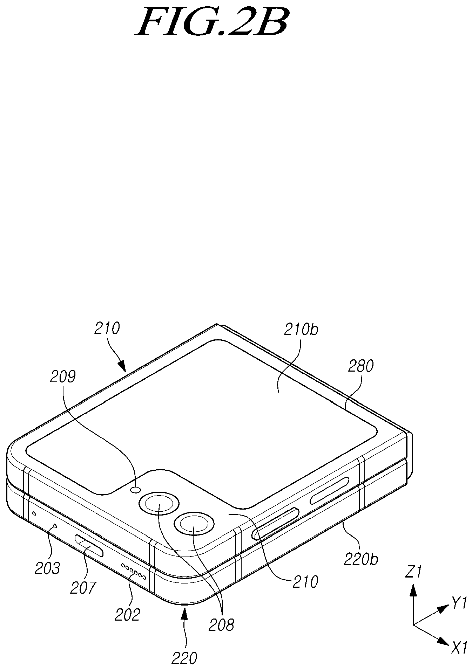

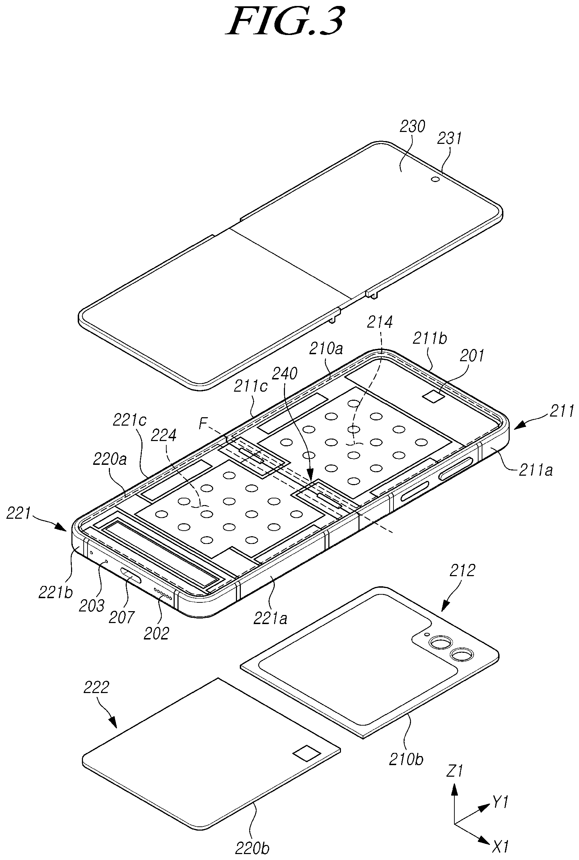

FIG. 2A is a perspective view illustrating a foldable electronic device in an unfolded state according to an embodiment of the disclosure. FIG. 2B is a perspective view illustrating a foldable electronic device in a folded state according to an embodiment of the disclosure. FIG. 3 is an exploded view illustrating a foldable electronic device according to an embodiment of the disclosure.

The electronic device shown in FIGS. 2A to 3 is for illustrative purposes only, and the disclosure is not limited by the drawings. The XYZ coordinate system shown in FIGS. 2A to 3 is for illustrative purposes of describing the layout of the components and does not limit the scope of the claims.

The electronic device 200 (e.g., the electronic device 101 of FIG. 1) may include at least one pair of housings 210 and 220. The pair of housings 210 and 220 may be rotatably coupled to fold about, e.g., a hinge (e.g., the hinge 240 of FIG. 3) while facing each other. For example, the pair of housings 210 and 220 may include a first housing 210 and a second housing 220. The first housing 210 and the second housing 220 may be disposed on two opposite sides of the folding axis F. One end area of the first housing 210 and one end area of the second housing 220 may be disposed side by side with the hinge 240 interposed therebetween. The first housing 210 and the second housing 220 may have symmetrical shapes with respect to a plane including the folding axis F and extending in the Z1-axis direction. Here, the folding axis F may be an axis in the X1 direction, formed by the hinge 240.

The first housing 210 may have substantially the same length as the second housing 220 (e.g., length in the Y1-axis direction), but is not limited thereto. The first housing 210 may have substantially the same width as the second housing 220 (e.g., width in the X1-axis direction), but is not limited thereto.

Hereinafter, 'unfolding state (or flat state)' or 'unfolded state' may refer to a state in which the angle between the first housing 210 and the second housing 220 is substantially 180 degrees. 'Folding state' or a 'folded state' may refer to a state in which the angle formed between the first housing 210 and the second housing 220 is substantially 0 degrees. 'Intermediate state' may refer to any state between the unfolding state and the folding state. The electronic device 200 may rotate about the hinge 240 such that the first housing 210 and the second housing 220 form an angle from 0 degrees to 180 degrees, for example. The electronic device 200 may rotate about the hinge 240 such that the first housing 210 and the second housing 220 form an angle from 180 degrees to 360 degrees, for example.

The first housing 210 may include a first surface 210a and a second surface 210b. For example, the first surface 210a may be provided to face in a first direction (e.g., +Z1-axis direction). The first surface 210a may be, e.g., a surface on which at least a portion of the flexible display 230 is disposed. The first surface 210a may refer to, e.g., a virtual surface overlapping at least a portion of the flexible display 230. For example, the second surface 210b may be provided to face in a second direction (e.g., -Z1-axis direction). The second surface 210b may be, e.g., a surface on which the display 280 is disposed. The second surface 210b may be, e.g., a surface on which the first rear cover 212 is disposed. The second surface 210b may be parallel to the first surface 210a. The second surface 210b may refer to a plane defined by, e.g., the first rear cover 212.

The second housing 220 may include a third surface 220a and a fourth surface 220b. For example, the third surface 220a may be provided to face in the first direction (e.g., +Z1-axis direction). The third surface 220a may be, e.g., a surface on which at least a portion of the flexible display 230 is disposed. The third surface 220a may refer to, e.g., a virtual surface overlapping at least a portion of the flexible display 230. For example, the fourth surface 220b may be provided to face in a second direction (e.g., -Z1-axis direction). The fourth surface 220b may be, e.g., a surface on which the second rear cover 222 is disposed. The fourth surface 220b may be parallel to the third surface 220a. The fourth surface 220b may refer to a plane defined by, e.g., the second rear cover 222.

When the electronic device 200 is unfolded, the first surface 210a and the third surface 220a may be positioned within one arbitrary virtual plane (e.g., an x-y plane). For example, the first surface 210a and the third surface 220a may form the same plane when the electronic device 200 is unfolded. For example, the first surface 210a and the third surface 220a may be disposed to form substantially 180 degrees with respect to the x-y plane in the unfolded state. When the electronic device 200 is unfolded, the second surface 210b and the fourth surface 220b may be positioned within another arbitrary virtual plane (e.g., an x-y plane). For example, the second surface 210b and the fourth surface 220b may form the same plane in the unfolded state of the electronic device 200. For example, the second surface 210a and the fourth surface 220b may be disposed to form substantially 180 degrees with respect to the x-y plane in the unfolded state.

In the folded state of the electronic device 200, at least a portion of the first surface 210a and at least a portion of the third surface 220a may face each other. For example, in the folded state of the electronic device 200, the angle between the first surface 210a and the third surface 220a may be substantially 0 degrees from the x-y plane. As the electronic device 200 is folded from the unfolded state, the angle between the first surface 210a and the third surface 220a from the x-y plane may gradually decrease. For example, the angle formed between the first surface 210a and the third surfaces 220a from the x-y plane in the intermediate state may be determined between about 0 degrees and about 180 degrees. In the folded state of the electronic device 200, the second surface 210b and the fourth surface 220b may be parallel to each other. For example, the second surface 210b and the fourth surface 220b may face in opposite directions in the folded state of the electronic device 200.

The pair of housings 210 and 220 included in the electronic device 200 is not limited to the shape and coupling shown but may rather be implemented in other shapes or via a combination and/or coupling of other components.

The first housing 210 may include a first side frame 211. The first side frame 211 may constitute a side surface of the first housing 210. The first side frame 211 may form part of the exterior of the first housing 210. The first side frame 211 may be provided to protect components received inside the electronic device 200 from the outside.

The first side frame 211 may include a first side member 211a, a second side member 211b, and/or a third side member 211c. The first side member 211a may have a first length along a first length direction (e.g., Y1-axis direction). The second side member 211b may extend from the first side member 211a in a substantially vertical direction (e.g., the X1-axis direction). The second side member 211b may extend to have a second length equal to or different from the first length. The third side member 211c may extend from the second side member 211b in a substantially vertical direction (e.g., the Y1-axis direction). The third side member 211c may extend in a direction substantially parallel to the first side member 211a. The third side member 211c may have a first length along the first length direction (e.g., Y1-axis direction).

The first side member 211a, the second side member 211b, and the third side member 211c may be disposed to be visible from the outside. At least a portion of the first side member 211a, the second side member 211b, and/or the third side member 211c may be formed of a curved surface. The first side frame 211 may be formed in a rectangular (e.g., square or rectangular) shape by the first side member 211a, the second side member 211b, and the third side member 211c. The first side member 211a, the second side member 211b, and the third side member 211c may be integrally formed, but are not limited thereto.

The second housing 220 may include a second side frame 221. The second side frame 221 may constitute a side surface of the second housing 220. The second side frame 221 may form part of the exterior of the first housing 220. The second side frame 221 may be provided to protect components received inside the electronic device 200 from the outside.

The second side frame 221 may include a fourth side member 221a, a fifth side member 221b, and/or a sixth side member 221c. The fourth side member 221a may have a third length along a first length direction (e.g., Y1-axis direction). The fifth side member 221b may extend from the fourth side member 221a in a substantially vertical direction (e.g., the X1-axis direction). The fifth side member 221b may extend to have a fourth length equal to or different from the third length. The sixth side member 221c may extend from the fifth side member 221b in a substantially vertical direction (e.g., the Y1-axis direction). The sixth side member 221c may extend in a direction substantially parallel to the fourth side member 221a. The sixth side member 221c may have a third length along the first length direction (e.g., Y1-axis direction).

The fourth side member 221a, the fifth side member 221b, and the sixth side member 221c may be disposed to be visible from the outside. At least a portion of the fourth side member 221a, the fifth side member 221b, and/or the sixth side member 221c may be formed of a curved surface. The second side frame 221 may be formed in a rectangular (e.g., square or rectangular) shape by the fourth side member 221a, the fifth side member 221b, and the sixth side member 221c. The first length may be substantially equal to the third length. The second length may be substantially equal to the fourth length. The fourth side member 221a, the fifth side member 221b, and the sixth side member 221c may be integrally formed, but are not limited thereto.

In the unfolded state of the electronic device 200, the first side member 211a and the fourth side member 221a may be positioned substantially in a straight line. In the unfolded state of the electronic device 200, the second side member 211b and the fifth side member 221b may be parallel to each other. In the unfolded state of the electronic device 200, the third side member 211c and the sixth side member 221c may be positioned substantially in a straight line.

In the folded state of the electronic device 200, the first side member 211a and the fourth side member 221a may at least partially overlap each other. In the folded state of the electronic device 200, the second side member 211b and the fifth side member 221b may at least partially overlap each other. In the folded state of the electronic device 200, the third side member 211c and the sixth side member 221c may at least partially overlap each other.

The first housing 210 may include a first rear cover 212. The first rear cover 212 may form at least a portion of the second surface 210b of the first housing 210. The first rear cover 212 may be combined with the first side frame 211. The first rear cover 212 may be integrally formed with, e.g., the first side frame 211.

The second housing 220 may include a second rear cover 222. The second rear cover 222 may form at least a portion of the fourth surface 220b of the second housing 220. The second rear cover 222 may be combined with the second side frame 221. The second rear cover 222 may be integrally formed with, e.g., the second side frame 221.

The first rear cover 212 and/or the second rear cover 222 may be formed of at least one of, or a combination of at least two of, laminated or colored glass, ceramic, Glastic, polymer, or metal (e.g., aluminum, stainless steel (STS), or magnesium).

The electronic device 200 may include a flexible display 230 (e.g., a foldable display or display). The flexible display 230 may be disposed across the first housing 210, the hinge 240 and the second housing 220. The flexible display 230 may be disposed from the first surface 210a of the first housing 210 across the hinge structure 240 up to at least a portion of the third surface 220a of the second housing 220. The flexible display 230 may be disposed so that the first surface 210a of the first housing 210 and the third surface 220a of the second housing 220 overlap. A portion of the flexible display 230 corresponding to the hinge 240 may be bent according to the rotation of the hinge 240.

In the unfolding (or unfolded) state, the flexible display 230 may be disposed to be visible from the outside. In a folding (or folded) state, the flexible display 230 may be disposed to be invisible (or not visible) from the outside.

The electronic device 200 may include a protective cover 231. The protective cover 231 may be positioned to protect an edge portion of the flexible display 230. The protective cover 231 may form part of the exterior of the electronic device 200.

The electronic device 210 may include at least one of an input device (e.g., the microphone 203), a sound output device (e.g., the receiver 201 for phone calls or speaker 202), sensor modules 204, a camera module (the first camera module 205 or second camera module 208), a connector port 207, a key input device (not shown), or an indicator (not shown), disposed in the first inner space 214 of the first housing 210 or the second inner space 224 of the second housing 220. The electronic device 200 may be configured to omit at least one of the above-described components or add other components.

The input device may include a plurality of microphones disposed to detect the direction of sound. The sound output device may include, e.g., the receiver 201 for phone calls and the speaker 202. The sound output devices 201 and 202 may be disposed to face the outside through at least one speaker hole formed in the first housing 210 or the second housing 220. The connector port 207 may be disposed to face the outside through a connector port hole formed in the first housing 210 or the second housing 220.

The sensor module 204 may produce an electrical signal or data value corresponding to the internal operation state or external environment state of the electronic device 200. The sensor module 204 may include at least one of a proximity sensor, an illuminance sensor, a time of flight (TOF) sensor, an ultrasonic sensor, a fingerprint recognition sensor, a gesture sensor, a gyro sensor, an air pressure sensor, a magnetic sensor, an accelerometer, a grip sensor, a color sensor, an infrared (IR) sensor, a biometric sensor, a temperature sensor, or a humidity sensor.

The electronic device 200 may include a first camera module 205 disposed on the front (e.g., surface in the +Z1-axis direction) of the electronic device 200 or a second camera module 208 disposed on the rear surface (e.g., surface in the -Z1-axis direction) of the electronic device 200. The first camera module 205 and/or the second camera module 208 may include one or more lenses, an image sensor, and/or an image signal processor. For example, the first camera module 205 may be disposed under the flexible display 230 and be configured to capture a subject through a portion of the active area of the flexible display 230. The flash 209 may be disposed on the second camera module 208. The flash 209 may include, e.g., a light emitting diode (LED) or a xenon lamp.

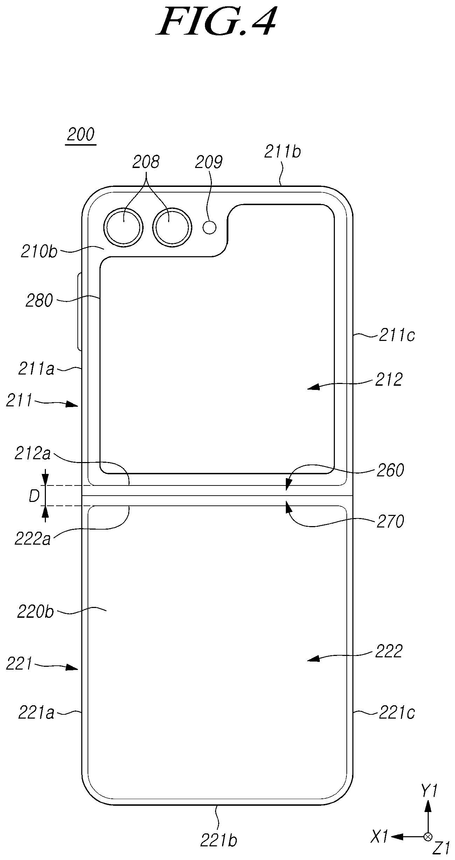

FIG. 4 is a rear view illustrating a foldable electronic device according to an embodiment.

The electronic device 200 of FIG. 4 may be overall identical to the electronic device 200 of FIGS. 2A to 3. The electronic device 200 illustrated in FIG. 4 is provided as an example for convenience of description, and the shape of the electronic device 200 does not limit the scope of claims of the disclosure.

Referring to FIG. 4, when viewed from the rear surface, a first rear cover 212, a first frame 260, a second frame 270, and a second rear cover 222 may be disposed on the rear surface of the electronic device 200.

According to an example, the first frame 260 may have a component extending from the first side frame 211. The first frame 260 may be formed to be connected to the first side member 211a, the second side member 211b, and/or the third side member 211c of the first side frame 211. The first frame 260 may be integrally formed with the first side frame 211, but is not limited thereto and may be provided as a separate component. The first frame 260 may include, e.g., a portion forming a portion of the rear exterior of the electronic device 200.

According to an example, the second frame 270 may have a component extending from the second side frame 221. The second frame 270 may be formed to be connected to the fourth side member 221a, the fifth side member 221b, and/or the sixth side member 221c of the second side frame 221. The second frame 270 may be integrally formed with the second side frame 221, but is not limited thereto and may be provided as a separate component. The second frame 270 may include, e.g., a portion forming a portion of the rear exterior of the electronic device 200.

According to an example, the interval D may be an interval between the first rear cover 212 and the second rear cover 222. The interval D may be defined as, e.g., an interval between a first edge 212a among the edges of the first rear cover 212 and a second edge 222a among the edges of the second rear cover 222.

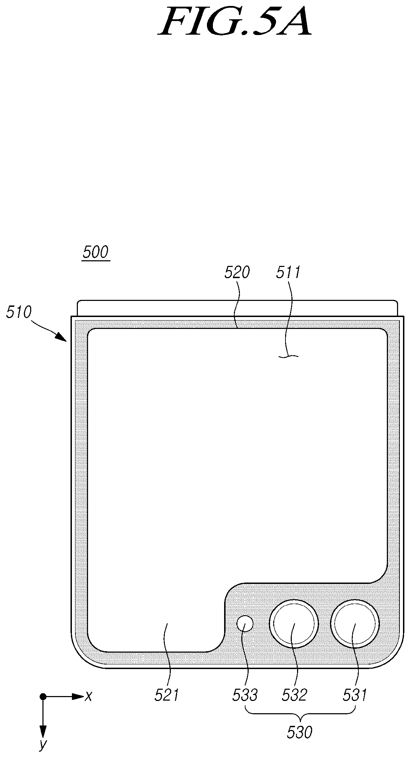

FIG. 5A is a view illustrating a display of an electronic device according to an embodiment of the disclosure.

In the embodiment of FIG. 5A, the electronic device 500 may be, e.g., the electronic device 101 of FIG. 1 or the electronic devices 200 of FIGS. 2A to 4, and the display 520 of the electronic device 500 may be, e.g., the display module 160 of the electronic device 101 of FIG. 1 or the display 280 of the electronic devices 200 of FIGS. 2A to 4. In the disclosure, the display 520 may be referred to as a cover display, an external display, a rear display, or a sub display.

The embodiment of FIG. 5A illustrates a front view of the electronic device 500 in a folded state.

According to an embodiment, the display 520 may be activated while the electronic device 500 is in the folded state, but is not limited thereto. For example, if necessary, the display 520 may be activated even when the electronic device 500 is in an intermediate state or an unfolded state.

According to an embodiment, the display 520 may be accommodated (or disposed) in (or on) the first housing 510 (e.g., the first housing 210 of FIG. 2A) of the electronic device 500.

According to an embodiment, the display 520 may be disposed on the first surface 511 of the first housing 510 of the electronic device 500 (e.g., the second surface 210b of the first housing 510 of FIG. 2A). According to an embodiment, the first surface 511 on which the display 520 is disposed (e.g., the second surface 210b of the first housing 510 of FIG. 2A) may be a surface opposite to the second surface 210a on which the flexible display (e.g., the flexible display 230 of FIG. 2A) is disposed (e.g., the first surface 210a of the first housing 510 of FIG. 2A). For example, in a state in which the electronic device 500 is in the unfolded state, the display 520 may be seen in a direction (e.g., the -z-axis direction) of the first surface 511 opposite to a direction (e.g., the +z-axis direction) of the second surface on which the flexible display is disposed.

According to an embodiment, the display 520 may be a display having a notch structure (which may also be described as an asymmetrical structure or shape, for example comprising a main portion, which may be generally rectangular, and a minor portion 521, which again may be generally rectangular, but smaller than the main portion, and extending from a side or edge of the main portion). For example, as illustrated in FIG. 5A, the display 520 may have a structure including a notch portion 521 at a lower left end, but is not limited thereto. For example, the notch portion may be positioned at the lower right end of the display 520. As illustrated, the display 520 may have an atypical or asymmetric shape having a notch structure.

According to an embodiment, the shape and/or arrangement structure and/or position of the notch portion 521 of the display 520 may be different according to the settings of at least one hole 530 formed in the first surface 511 of the first housing 510 (e.g., the number of holes, the arrangement structure of holes, and/or the arrangement position of holes).

According to an embodiment, the length of the notch portion 521 in the horizontal direction (e.g., the x-axis direction) and the length of the notch portion 521 in the vertical direction (e.g., the y-axis direction) may be smaller than the length of the display 520 in the horizontal direction (e.g., the x-axis direction) and the length of the display 520 in the vertical direction (e.g., the y-axis direction). For example, the area of the notch portion 521 may be smaller than the area of the entire display 520 except for the notch portion 521.

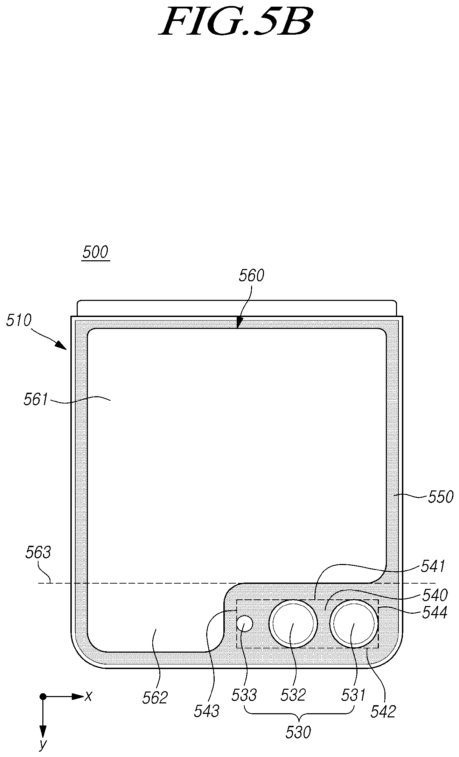

According to an embodiment, the first surface 511 of the first housing 510 may include at least one hole 530. For example, as illustrated in FIG. 5A, the first surface 511 of the first housing 510 may include two camera holes 531 and 532 and/or one flash hole 533. Each rear camera module (e.g., the second camera module 208 of FIG. 2B) may be disposed in each of the camera holes 531 and 532. A flash (e.g., the flash 209 of FIG. 2B) may be disposed in the flash hole 533. As described above, in the example of FIGS. 5A and 5B, two camera holes 531 and 532 and one flash hole 533 are formed in the first surface 511 of the first housing 510. However, embodiments are not limited thereto, and the number of camera holes and/or the number of flash holes formed in the first surface 511 of the first housing 510 may be changed according to embodiments. For example, one or three or more camera holes may be formed in the first surface 511 of the first housing 510. For example, 0 or 2 or more flash holes may be formed in the first surface 511 of the first housing 510.

According to an embodiment, the at least one hole 530 may be disposed in the first area of the first surface 511 of the first housing 510. For example, as illustrated in FIG. 5A, at least one hole 530 may be disposed in an area at the lower right end of the first surface 511 of the first housing 510. In this case, the notch portion 521 of the display 520 may be disposed in an area at the lower left end of the first surface 511 of the first housing 510. However, embodiments are not limited thereto, and at least one hole 530 may be disposed in various areas of the first surface 511 of the first housing 510. For example, at least one hole 530 may be disposed in an area at the lower left end of the first surface 511 of the first housing 510. In this case, the notch portion 521 of the display 520 may be disposed in an area at the lower right end of the first surface 511 of the first housing 510. As such, the notch portion 521 of the display 520 and the arrangement area and/or position of the at least one hole 530 may be related to each other.

According to an embodiment, at least one hole 530 may be arranged in the first direction. For example, as illustrated in FIG. 5A, the flash hole 533 and the two camera holes 531 and 532 may be arranged in a horizontal direction (e.g., the x-axis direction) of the electronic device 500. For example, two camera holes 531 and 532 may be arranged side by side in the x-axis direction so that a line connecting the uppermost end portions (or points) of the two camera holes 531 and 532 is parallel to a line connecting the lowermost end portions (or points) of the two camera holes 531 and 532. For example, the two camera holes 531 and 532 and the flash hole 533 may be arranged side by side in the x-axis direction so that a line passing through the centers of the two camera holes 531 and 532 passes through the center of the flash hole 533. As described above, in the example of FIG. 5A, two camera holes 531 and 532 and one flash hole 533 are arranged in the horizontal direction (e.g., the x-axis direction) of the electronic device 500, but embodiments are not limited thereto, and the arrangement and/or arrangement structure of the holes may vary according to embodiments. For example, two camera holes may be arranged in the horizontal direction (e.g., the x-axis direction) of the electronic device 500, and one of the two camera holes and one flash hole may be arranged in the vertical direction or the length direction (e.g., a y-axis direction) of the electronic device 500.

FIG. 5B is a view illustrating a display area of a display of an electronic device according to an embodiment of the disclosure.

In an embodiment of FIG. 5B, the description of the electronic device 500 and the display 520 of the electronic device 500 may refer to the description of the electronic device 500 and the display 520 of the electronic device 500 of FIG. 5A. Therefore, no duplicate description is given.

The embodiment of FIG. 5B illustrates a front view of an electronic device 500 in a folded state.

Referring to FIG. 5B, according to an embodiment, the first surface 511 of the first housing 510 may include a hole area 540 including at least one hole 530. For example, as illustrated in FIG. 5B, the first surface 511 of the first housing 510 may include a hole region 540 including two camera holes 531 and 532 and/or one flash hole 533. As described above, the type and/or number of holes may vary according to embodiments.

According to an embodiment, the hole region 540 may be defined as a region (or a virtual region) including at least some of holes 531, 532, and 533 formed in the first surface 511 of the first housing 510. For example, the hole region 540 may be a region including all of the camera holes 531 and 532 and the flash hole 533. For example, the hole region 540 may be a region including only the camera holes 531 and 532.

According to an embodiment, the upper portion of the hole region 540 may be aligned (or in contact) with the upper portion of the camera holes 531 and 532. For example, as illustrated in FIG. 5B, the line 541 defining the upper portion of the hole region 540 may be defined to pass through the uppermost points of the two camera holes 531 and 532. According to an embodiment, the lower portion of the hole region 540 may be aligned (or in contact) with the lower portion of the camera holes 531 and 532. For example, as illustrated in FIG. 5B, the line 542 defining the lower portion of the hole region 540 may be defined to pass through the lowermost points of the two camera holes 531,532. According to an embodiment, the left portion of the hole region 540 may be aligned (or in contact) with the left portion of the hole 533 positioned on the leftmost side among the holes 531, 532, and 533. For example, as illustrated in FIG. 5B, the line 543 defining the left portion of the hole region 540 may be defined to pass through the leftmost point of the hole 533 positioned on the leftmost side among the holes 531, 532, and 533. According to an embodiment, the right portion of the hole region 540 may be aligned (or in contact) with the right portion of the hole 531 positioned on the rightmost side among the holes 531, 532, and 533. For example, as illustrated in FIG. 5B, the line 544 defining the right portion of the hole region 540 may be defined to pass through the rightmost point of the hole 531 positioned on the rightmost side among the holes 531, 532, and 533. Through the settings of the hole region 540 having a shape matching the boundary of the holes, a hole region 540 fitting the arrangement structure of the camera and/or the flash may be defined.

Meanwhile, in the example of FIG. 5B, the shape of the hole region 540 may be changed according to an embodiment, although the hole region 540 has a shape matching a boundary (or a border line) of the holes. For example, a hole region having a larger size including the hole region 540 illustrated in FIG. 5B may be defined. A hole region having a shape different from that of the hole region 540 illustrated in FIG. 5B may be defined.

According to an embodiment, the display 520 (or the first surface 511 of the first housing 510) may include an active display area 560 that is visible to the outside of the electronic device 500 through at least a portion of the remaining region 550 other than the hole region 540 in the first surface 511.

According to an embodiment, at least a portion of the hole region 540 and/or at least a portion of the remaining region 550 other than the hole region 540 in the first surface 511 may have a designated color. For example, at least a portion of the hole region 540 and/or at least a portion of the remaining region 550 other than the hole region 540 in the first surface 511 may be a printing area printed in a designated color. For example, the hole region 540 and the region other than the active display area 560 of the display 520 in the remaining region 550 may be a printing area (e.g., black matrix (BM)) printed in a designated color (e.g., black). In the disclosure, the active display area 560 may be used interchangeably with the display 520 or the display area of the display 520.

According to an embodiment, the active display area 560 may include a first display area 561 and a second display area 562 having a size smaller than that of the first display area. According to an embodiment, the second display area 562 may correspond to a notch portion (e.g., the notch portion 521 of FIG. 5A). In the disclosure, the first display area 561 may be referred to as a first active display area, and the second display area 562 may be referred to as a second active display area.

According to an embodiment, the second display area 562 may protrude in a first direction (e.g., the +y-axis direction or the direction of the lower frame of the electronic device 500) with respect to the first display area 561.

According to an embodiment, the second display area 562 may extend (or expand) from the first display area 561. For example, the second display area 562 may extend in the first direction from at least one portion on one side of the first display area 561. For example, as illustrated in FIG. 5B, the second display area 562 may extend from at least one portion on one side (e.g., a lower side) of the first display area 561 in the first direction (e.g., the +y-axis direction or the direction of the lower frame of the electronic device 500).

According to an embodiment, the extending length of the second display area 562 may be shorter than the height of the first display area 561 (e.g., the length in the vertical direction or the y-axis direction). For example, the height (e.g., the length in the vertical direction or the y-axis direction) of the second display area 562 may be shorter than the height (e.g., the length in the vertical direction or the y-axis direction) of the first display area 561.

According to an embodiment, the length of the second display area 562 in the horizontal direction (e.g., the x-axis direction) may be shorter than the length of the first display area 561 in the horizontal direction (e.g., the x-axis direction).

According to an embodiment, the first display area 561 may be formed in the first direction (e.g., -y-axis) with respect to the hole region 540, and the second display area 562 may be formed in the second direction (e.g., -x-axis direction) substantially perpendicular to the first direction with respect to the hole region 540.

According to an embodiment, the first display area 561 and the second display area 562 may be divided by a border line 563. In the disclosure, the border line 563 may be referred to as a physical border line or a virtual border line.

According to an embodiment, the border line 563 may be aligned with a portion of the line defining the boundary of the active display area 560. For example, as illustrated in FIG. 5B, the border line 563 may be aligned with at least a portion of a lower line (or an edge) defining the lower boundary of the active display area 560. For example, the lower line defining the lower boundary of the active display area 560 aligned with the border line 563 may be positioned above the line 541 defining the upper portion of the hole region 540.

According to an embodiment, the border line 563 may be defined as a line horizontal to the horizontal direction (e.g., the x-axis direction) of the electronic device 500.

According to an embodiment, the at least one hole 530 and/or the hole region 540 may be positioned below the border line 563. For example, the upper portion of the hole 530 may be positioned below the border line 563. For example, the line 541 defining the upper portion of the hole region 540 may be positioned below the border line 563. For example, the line 541 defining the upper portion of the hole region 540 may be a line parallel to the border line 563 and positioned below the border line 563.

According to an embodiment, the electronic device 500 may display a main view using the first display area 561 and a sub-view using the second display area 562. According to an embodiment, the size of the sub-view may be smaller than the size of the main view. According to an embodiment, the main view may be associated with a first application, and the sub-view may be associated with the first application or a second application different from the first application. In the disclosure, the main view may be referred to as a first view, a main screen, and a first screen, and the sub-view may be referred to as a second view, a sub screen, and a second screen.

According to an embodiment, the electronic device 500 may display a single view (full view) using the first display area 561 and the second display area 562.

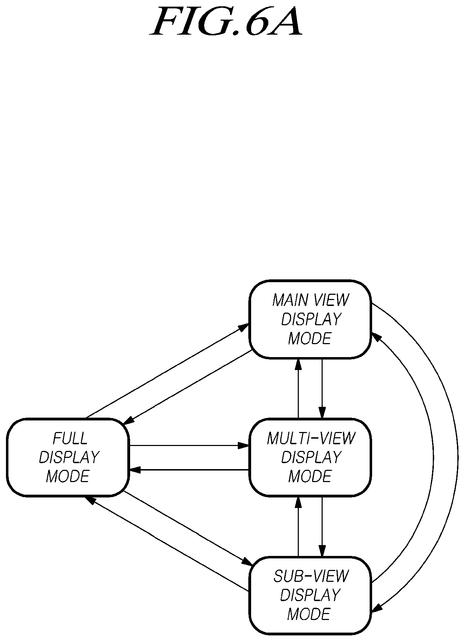

FIG. 6A is a view illustrating a display mode of an electronic device according to an embodiment of the disclosure.

Referring to FIG. 6A, according to an embodiment, an electronic device (e.g., the electronic device 500 of FIGS. 5A and 5B) may display at least one execution screen (or view) and/or an outside-the-view area on the display (e.g., the display 520 of FIGS. 5A and 5B) using one of at least one display mode. The outside-the-view area may be, e.g., an area outside the area in which at least one view is displayed on the display. According to an embodiment, the outside-the-view area may include a gap area positioned between the main view and the sub-view. According to an embodiment, the outside-the-view area may be displayed in a designated color (e.g., black).

According to an embodiment, the at least one display mode may include at least one of a full display mode, a multi-view display mode, a main view display mode, or a sub-view display mode.

According to an embodiment, the full display mode may be a display mode in which one screen (or view) is displayed on the display. For example, in the full display mode, the electronic device may display one full screen (or full view) in the entire active display area (e.g., the active display area 560 of FIG. 5B) including the first display area (e.g., the first display area 561 of FIG. 5B) and the second display area (e.g., the second display area 562 of FIG. 5B).

According to an embodiment, the multi-view display mode may be a display mode in which the main view (the first view) and the sub-view (the second view) are simultaneously (or together) displayed on the display. For example, in the multi-view display mode, the electronic device may display the main view in the first display area, may display the sub-view in the second display area, and may display the gap area between the main view and the sub-view. According to an embodiment, the size of the sub-view may be smaller than the size of the main view. According to an embodiment, the gap area may be associated with a boundary between the first display area and the second display area. In the disclosure, the multi-view display mode may be referred to as a simultaneous display mode.

According to an embodiment, the main view display mode may be a mode in which only the main view (the first view) is displayed on the display. For example, in the main view display mode, the electronic device may display the main view in the first display area and may not display the sub-view in the second display area. In the main view display mode, the electronic device may display an outside-the-view area having a designated color (e.g., black) in the area other than the area in which the main view is displayed, or may deactivate the area other than the area in which the main view is displayed.

According to an embodiment, the sub-view display mode may be a mode in which only the sub-view (second view) is displayed on the display. For example, in the sub-view display mode, the electronic device may display the sub-view in the second display area and may not display the main view in the first display area. In the sub-view display mode, the electronic device may display the outside-the-view area having a designated color (e.g., black) in an area other than the area in which the sub-view is displayed.

According to an embodiment, when at least one designated (or defined) condition for an event is met, the electronic device may switch (or transition) the display mode. For example, as illustrated in FIG. 6A, when at least one designated (or defined) condition for an associated event is met, the electronic device may switch the display mode from one display mode (e.g., the full display mode, the multi-view display mode, the main view display mode, or the sub-view display mode) to another display mode. For example, when at least one designated condition for a first event associated with the multi-view display mode (or multi-view display) is met, the electronic device may apply the multi-view display mode as the display mode. For example, when at least one designated condition for a second event associated with the sub-view display mode (or sub-view display) is met in a state in which the multi-view display mode is applied, the electronic device may switch the display mode from the multi-view display mode to the sub-view display mode.

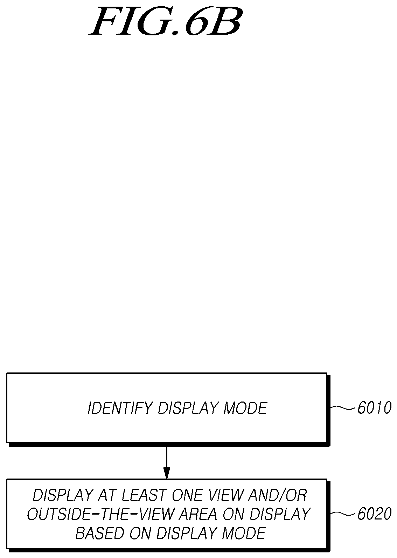

FIG. 6B is a flowchart illustrating a method for an electronic device to display at least one execution screen according to a display mode according to an embodiment of the disclosure.

Referring to FIG. 6B, in operation 6010, the electronic device (e.g., the electronic device 500 of FIGS. 5A and 5B) may identify a display mode. According to an embodiment, the electronic device may identify, e.g., one of the display modes of FIG. 6A (e.g., the full display mode, the multi-view display mode, the main view display mode, and/or the sub-view display mode).

In operation 6020, the electronic device may display at least one view and/or the outside-the-view area on the display, based on the identified display mode.

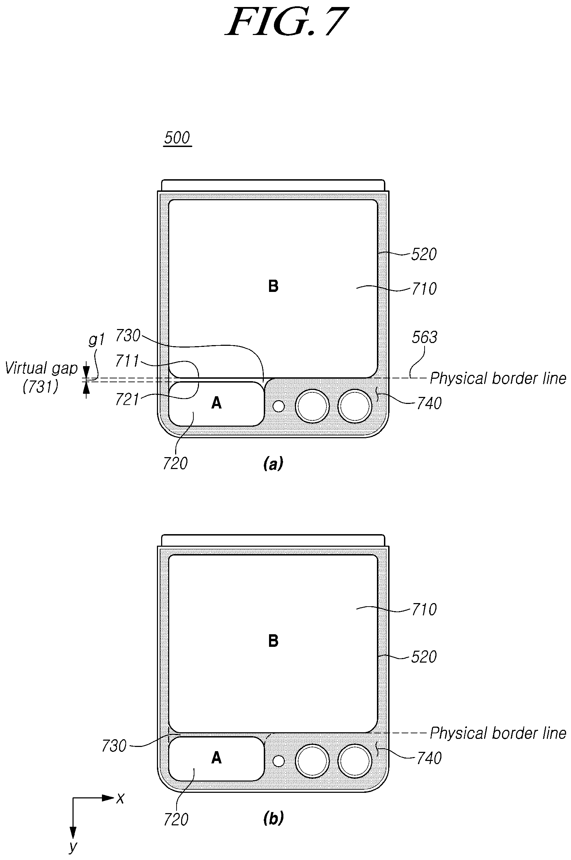

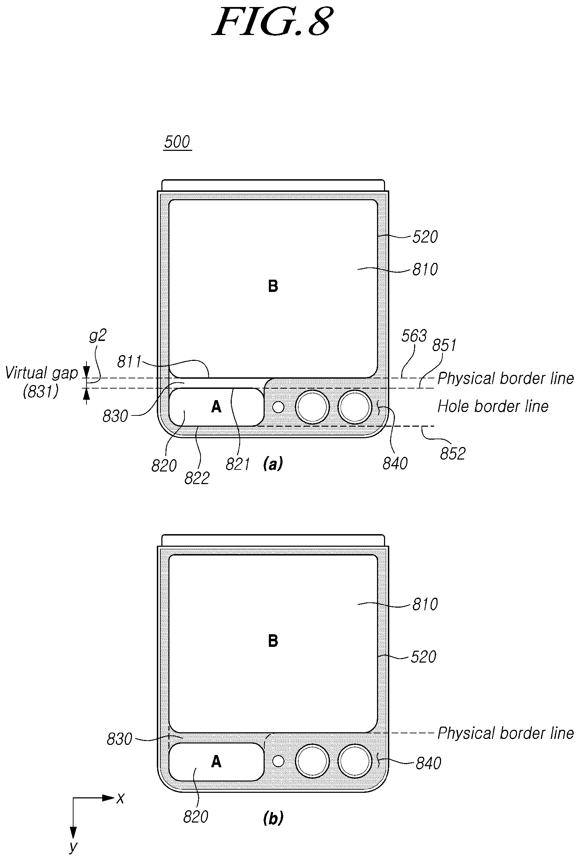

According to an embodiment, when the multi-view display mode is identified, the electronic device may display the main view, the sub-view, and the gap area between the main view and the sub-view on the display (e.g., the active display area 560 of FIGS. 5A and 5B). According to an embodiment, the main view may be configured to be displayed in the first display area (e.g., the first display area 561 of FIG. 5B). According to an embodiment, the sub-view may be configured to be displayed in the second display area (e.g., the second display area 562 of FIG. 5B). According to an embodiment, the gap area may be set to be displayed in a designated color (e.g., black) between the main view and the sub-view. According to an embodiment, the gap area may be associated with a boundary between the first display area and the second display area. An example of a display according to a multi-view display mode is described below with reference to FIGS. 7 and 8.

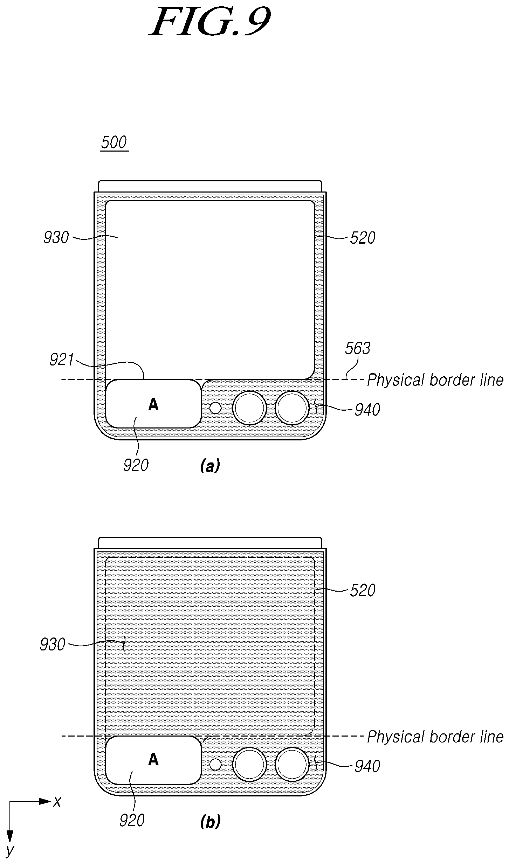

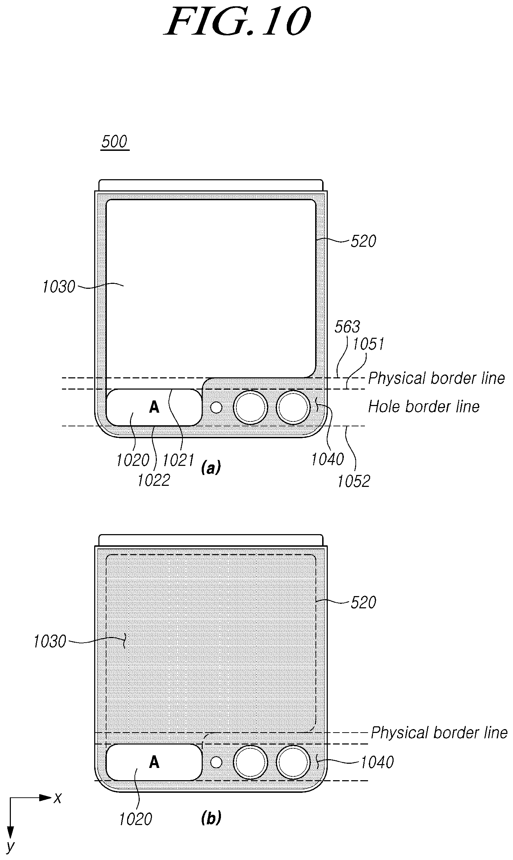

According to an embodiment, when the sub-display mode is identified, the electronic device may display the sub-view and the outside-the-subview area on the display (e.g., the active display area 560 of FIG. 5B). According to an embodiment, the sub-view may be configured to be displayed in the second display area (e.g., the second display area 562 of FIG. 5B). According to an embodiment, the outside-the-subview area may be configured to be displayed in a designated color (e.g., black) in an area outside the sub-view. An example of a display according to a sub display mode is described below with reference to FIGS. 9 and 10.

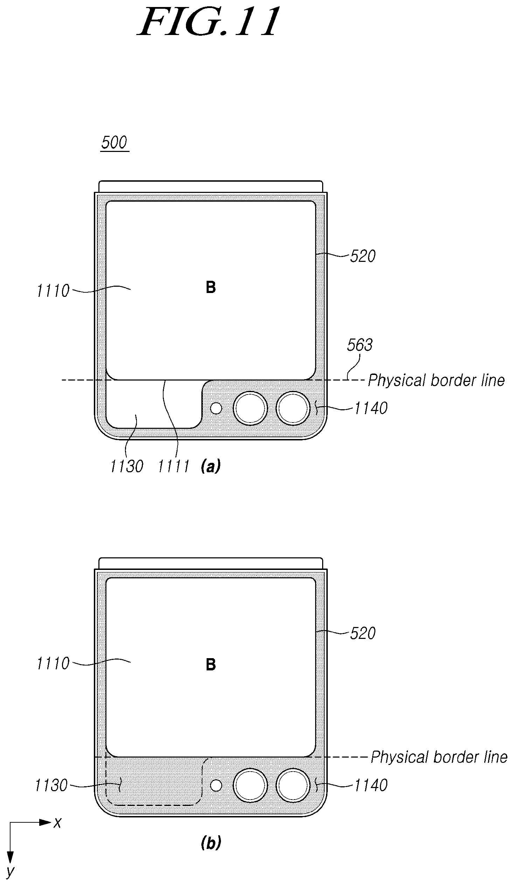

According to an embodiment, when the main display mode is identified, the electronic device may display the main view and the outside-the-main view area on the display (e.g., the active display area 560 of FIG. 5B). According to an embodiment, the main view may be configured to be displayed in the first display area (e.g., the first display area 561 of FIGS. 5A and 5B). According to an embodiment, the outside-the-main view area may be set to be displayed in a designated color (e.g., black) on the area outside the main view. An example of a display according to a main display mode is described below with reference to FIG. 11.

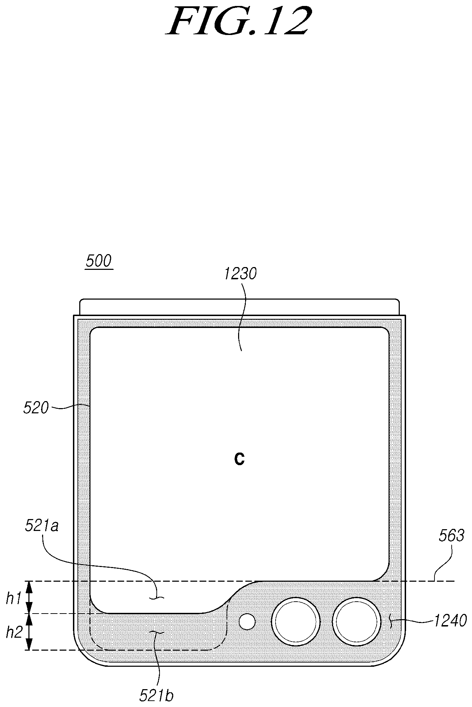

According to an embodiment, when the full display mode is identified, the electronic device may display the full view on the display (e.g., the active display area 560 of FIG. 5B). According to an embodiment, the full view may be configured to be displayed in the active display area (e.g., the active display area 560 of FIG. 5B). An example of a display according to a full display mode is described below with reference to FIG. 12.

FIG. 7 is a view illustrating a method for an electronic device to display a main view and a sub-view together according to an embodiment of the disclosure. The display mode of the embodiment of FIG. 7 may be, e.g., the multi-view display mode of FIG. 6A.

FIG. 7 illustrates a front view of an electronic device 500 in a folded state.

According to an embodiment, the display 520 may be disposed in (or on) a first surface (e.g., the second surface 210b of the first housing 210 of FIG. 2A or the first surface 511 of the first housing 510 of FIG. 5A) of the first housing of the electronic device 500.

Referring to (a) of FIG. 7, the electronic device 500 may display a main view (screen B) 710 and a sub-view (screen A) 720 together on the display 520 including an active display area (e.g., the active display area 560 of FIG. 5B).

According to an embodiment, the electronic device 500 may display the main view 710 in the first display area (e.g., the first display area 561 of FIG. 5B) and may display the sub-view 720 in the second display area (e.g., the second display area 562 of FIG. 5B). According to an embodiment, the size of the sub-view 720 may be smaller than the size of the main view 710.

According to an embodiment, the electronic device 500 may configure a line 711 (lower line) defining a lower boundary (e.g., a boundary in the +y-axis direction) among the boundaries of the main view 710 to be aligned with the border line 563.

According to an embodiment, the R values of the two lower corners of the main view 710 may be the same as the R values of the two lower corners of the sub-view 720. According to an embodiment, the R values of the four corners of the sub-view 720 may be the same as each other. Accordingly, a visual sense of unity between the main view and the sub-view may be maintained.

As illustrated in (a) of FIG. 7, when the main view 710 and the sub-view 720 are displayed simultaneously (or together) through one display 520, e.g., a visual element for separating the two views is required to increase usability (or visibility). To that end, the electronic device 500 may display a separate gap area 730 on the display 520 together with the main view 710 and the sub-view 720.

According to an embodiment, the electronic device 500 may display (or configure) a gap area 730 between the main view 710 and the sub-view 720. The gap area 730 may be used to visually separate the main view 710 from the sub-view 720.

According to an embodiment, the electronic device 500 may display the gap area 730 in substantially the same color as the color of the area 740 other than the display 520. For example, when the area 740 other than the display 520 is a printing area (black masking (BM)) printed in black, the electronic device 500 may display the gap area 730 in substantially the same color as black. The area 740 other than the display 520 may include, e.g., at least a portion of a hole region (e.g., the hole region 540 of FIG. 5B) and/or at least a portion of a remaining region (e.g., the remaining region 550 of FIG. 5B) other than the hole region. As such, the gap area 730 may be used only for color display for visually separating the main view 710 and the sub-view 720, but may not be used for providing separate information (or images, contents) to the user.

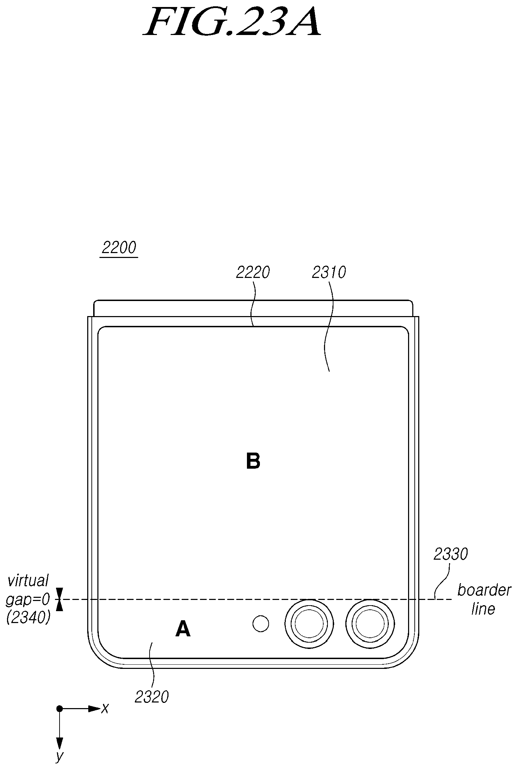

According to an embodiment, the gap area 730 may be defined by a value of the gap 731 between the main view 710 and the sub-view 720. The value of the gap 731 may be set to a value between 0 and a threshold (e.g., a value corresponding to the length of the notch portion of FIG. 5A in the vertical direction (e.g., the y-axis direction)). An example of a display in which the value of the gap 731 is set to 0 may be the same as illustrated in FIGS. 23A to 24B. In the disclosure, the gap 731 may be referred to as a virtual gap.

According to an embodiment, the gap area 730 may be associated with a boundary between the first display area and the second display area. For example, as illustrated in FIG. 7, the gap area 730 may be set to be lower (or higher) by a predetermined gap value from a boundary (e.g., the border line 563) between the first display area and the second display area.

According to an embodiment, displaying the gap area 730 may include configuring the size of the first view 710 displayed in the first display area or the size of the second view 720 displayed in the second display area to be reduced by the length (or the value of the gap 731) of the gap area 730 in the vertical direction (e.g., the y-axis direction). In the disclosure, the length of the gap area 730 in the vertical direction may be referred to as a width (or vertical width) of the gap area 730.

According to an embodiment, the value of the gap 731 may correspond to a distance between a line (lower line) 711 defining a lower boundary of the main view 710 and a line (upper line) 721 defining an upper boundary of the sub-view 720.

According to an embodiment, the electronic device 500 may set the value of the gap 731 to have a first value g1. The electronic device 500 may display the sub-view 720 in the second display area based on the set gap 731.

According to an embodiment, the electronic device 500 may display the length of the gap area 730 in the vertical direction as a first length, based on identifying that the first condition associated with the designated condition for the first event associated with the multi-view is met, and may display the length of the gap area 730 in the vertical direction as a second length different from the first length, based on identifying that the second condition associated with the designated condition for the first event associated with the multi-view is met. According to an embodiment, the electronic device 500 may adjust the length of the gap area 730 in the vertical direction by adjusting the value of the gap 731. As such, the length of the gap area 730 in the vertical direction or the value of the gap 731 may be flexibly set according to a designated condition.

According to an embodiment, the electronic device 500 may adjust the length of the gap area 730 in the vertical direction, based at least in part on the strength, speed, duration, or touch area corresponding to the touch input. For example, as the strength, speed, duration, or touch area corresponding to the touch input increases, the length of the gap area 730 in the vertical direction may increase. As such, the length of the gap area 730 in the vertical direction may be adjusted according to the user's touch input.

Referring to (b) of FIG. 7, the main view 710 and the sub-view 720 may be visually clearly separated due to the gap area 730 displayed in substantially the same color as the color of the area 740 other than the display 520. Accordingly, it is possible to provide the user with a visual effect as if the electronic device 500 displays the main view 710 and the sub-view 720, respectively, through two displays separated in hardware. The device may thus be arranged to emulate a multi-display device by partitioning a single display in response to a user input.

Meanwhile, according to an embodiment, the electronic device 500 may set a line 711 (lower line) defining a lower boundary of the main view 710 to be disposed on the border line 563. In this case, the value of the gap may be larger than the value of the gap 731 of FIG. 7, and the area of the gap area may be larger than the area of the gap area 730 of FIG. 7. In other words, the area of the portion where the information is not displayed on the display 720 becomes larger.

FIG. 8 is a view illustrating a method for an electronic device to display a main view and a sub-view together according to an embodiment of the disclosure.

The display mode of the embodiment of FIG. 8 may be, e.g., the multi-view display mode of FIG. 6A.

FIG. 8 illustrates a front view of an electronic device 500 in a folded state.

According to an embodiment, the display 520 may be disposed in (or on) a first surface (e.g., the second surface 210b of the first housing 210 of FIG. 2A or the first surface 511 of the first housing 510 of FIG. 5A) of the first housing of the electronic device 500.

Referring to (a) of FIG. 8, the electronic device 500 may display a main view (screen B) 810 and a sub-view (screen A) 820 together on the display 520 including an active display area (e.g., the active display area 560 of FIG. 5B).

According to an embodiment, the electronic device 500 may display the main view 810 in the first display area (e.g., the first display area 561 of FIG. 5B) and may display the sub-view 820 in the second display area (e.g., the second display area 562 of FIG. 5B). According to an embodiment, the size of the sub-view 820 may be smaller than the size of the main view 810.

According to an embodiment, the electronic device 500 may configure a line 811 (lower line) defining a lower boundary (e.g., a boundary in the +y-axis direction) among the boundaries of the main view 810 to be aligned with the border line 563.

According to an embodiment, the R values of the two lower corners of the main view 810 may be the same as the R values of the two lower corners of the sub-view 820. According to an embodiment, the R values of the four corners of the sub-view 820 may be the same as each other. Accordingly, a visual sense of unity between the main view and the sub-view may be maintained.

As illustrated in (a) of FIG. 8, when the main view 810 and the sub-view 820 are displayed simultaneously (or together) through one display 820, e.g., a visual element for separating the two views is required to increase usability (or visibility). To that end, the electronic device 500 may display a separate gap area 830 on the display 560 together with the main view 810 and the sub-view 820.

According to an embodiment, the electronic device 500 may display (or configure) a gap area 830 between the main view 810 and the sub-view 820. The gap area 830 may be used to visually separate the main view 810 from the sub-view 820.

According to an embodiment, the electronic device 500 may display the gap area 830 in substantially the same color as the color of the area 840 other than the display 520. For example, when the area 840 other than the display 520 is a printing area (BM) printed in black, the electronic device 500 may display the gap area 830 in substantially the same color as black. The area 840 other than the display 520 may include, e.g., at least a portion of a hole region (e.g., the hole region 540 of FIG. 5B) and/or at least a portion of a remaining region (e.g., the remaining region 550 of FIG. 5B) other than the hole region. As such, the gap area 830 may be used only for color display for visually separating the main view 810 and the sub-view 820, but may not be used for providing separate information (or images, contents) to the user.

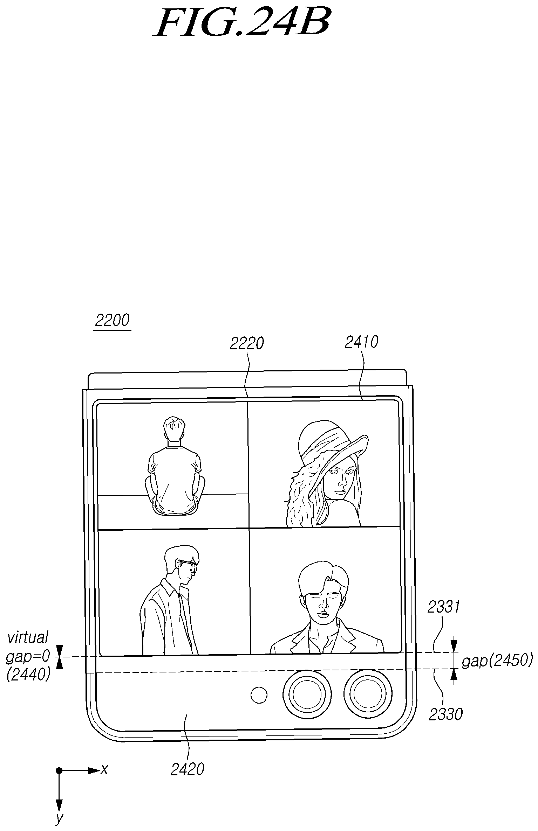

According to an embodiment, the gap area 830 may be defined by the value (or size) of the gap 831 between the main view 810 and the sub-view 820. The value of the gap 831 may be set to a value between 0 and a threshold (e.g., a value corresponding to the length of the notch portion of FIG. 5A in the vertical direction (e.g., the y-axis direction)). An example of a display in which the value of the gap 831 is set to 0 may be the same as illustrated in FIGS. 23A and 24B. In the disclosure, the gap 831 may be referred to as a virtual gap.

According to an embodiment, the gap area 830 may be associated with a boundary between the first display area and the second display area. For example, as illustrated in FIG. 8, the gap area 830 may be set to be lower (or higher) by a predetermined gap value from a boundary (e.g., the border line 563) between the first display area and the second display area.

According to an embodiment, displaying the gap area 830 may include configuring the size of the first view 810 displayed in the first display area or the size of the second view 820 displayed in the second display area to be reduced by the length (or the value of the gap 831) of the gap area 830 in the vertical direction (e.g., the y-axis direction).

According to an embodiment, the value of the gap 831 may correspond to a distance between a line (lower line) 811 defining a lower boundary of the main view 810 and a line (upper line) 821 defining an upper boundary of the sub-view 820.

According to an embodiment, the electronic device 500 may set the value of the gap 831 to have a second value g2. For example, the electronic device 500 may set a value of the gap 831 so that the upper line 821 of the sub-view 820 is aligned with the first hole border line 851. The value g2 of the gap 831 of the embodiment of FIG. 8 may be larger than the value g1 of the gap 731 of the embodiment of FIG. 7.

According to an embodiment, the upper line 821 of the sub-view 820 and/or the lower line 822 defining the lower boundary of the sub-view 820 may be aligned with the first hole border line 851 and/or the second hole border line 852, respectively. The first hole border line 851 may be, e.g., a border line passing through the uppermost points of two holes (e.g., the camera holes 531 and 532 of FIG. 5B). The second hole border line 852 may be, e.g., a border line passing through the lowermost points of two holes (e.g., the camera holes 531 and 532 of FIG. 5B). According to an embodiment, the first hole border line 851 and the second hole border line 852 may be parallel to the border line 563.

According to an embodiment, the first hole border line 851 may be aligned with the upper line of the hole region 840 (e.g., the upper line 541 of the hole region 540 of FIG. 5B), and the second hole border line 852 may be aligned with the lower line of the hole region 840 (e.g., the lower line 542 of the hole region 540 of FIG. 5B).

According to an embodiment, the electronic device 500 may set the upper line 821 of the sub-view 820 to be aligned with the first hole border line 851. For example, the electronic device 500 may set the upper line 821 of the sub-view 820 to be aligned with the first hole border line 851, and the lower line 822 of the sub-view 820 to be aligned with the second hole border line 852.

Referring to (b) of FIG. 8, the main view 810 and the sub-view 820 may be visually clearly separated due to the gap area 830 displayed in substantially the same color as the color of the area 840 other than the display 520. Accordingly, it is possible to provide the user with a visual effect as if the electronic device 500 displays the main view 810 and the sub-view 820, respectively, through two displays separated in hardware.

Further, by setting the boundary of the sub-view 820 to match the hole boundary (e.g., setting the length of the sub-view 820 in the vertical direction (e.g., the y-axis direction) to be the same as the length of the camera in the vertical direction (e.g., the y-axis direction)), a visual sense of unity between the shape of the sub-view 820 and the hole placement shape (or the camera placement shape) may be provided. However, by this configuration, the value g2 of the gap 831 of the embodiment of FIG. 8 may be larger than the value g1 of the gap 731 of the embodiment of FIG. 7. For example, the display efficiency of FIG. 8 may be relatively lower than the display efficiency of FIG. 7.

FIG. 9 is a view illustrating a method for an electronic device to display a sub-view according to an embodiment of the disclosure.

The display mode of the embodiment of FIG. 9 may be, e.g., the sub-view display mode of FIG. 6A.

FIG. 9 illustrates a front view of an electronic device 500 in a folded state.

According to an embodiment, the display 520 may be disposed in (or on) a first surface (e.g., the second surface 210b of the first housing 210 of FIG. 2A or the first surface 511 of the first housing 510 of FIG. 5A) of the first housing of the electronic device 500.

Referring to (a) of FIG. 9, the electronic device 500 may display only a sub-view (screen A) 920 on the display 520 including an active display area (e.g., the active display area 560 of FIG. 5B).

According to an embodiment, the electronic device 500 may display the sub-view 920 in the second display area (e.g., the second display area 562 of FIG. 5B). In this case, the main view is not displayed in the first display area (e.g., the first display area 561 of FIG. 5B).

According to an embodiment, the electronic device 500 may set a line 921 (upper line) defining the upper boundary of the sub-view 920 to be aligned with the border line 563. Accordingly, the sub-view 920 having the maximum size in the second display area may be provided.

According to an embodiment, the R values of the four corners of the sub-view 720 may be the same as each other.

As illustrated in (a) of FIG. 9, when only the sub-view 920 is displayed through one display 520, e.g., it is necessary to process the area 930 other than the sub-view 920 in the display 520 to save power consumption. In the disclosure, the area 930 may be referred to as an other-than-subview area or an outside-the-subview area.

According to an embodiment, the electronic device 500 may display the other-than-subview area 930 in the display 520 in a designated color.

According to an embodiment, the electronic device 500 may display the other-than-subview area 930 in the display 520 in substantially the same color as the color of the area 940 other than the display 520. For example, when the area 940 other than the display 520 is the printing area (BM) printed in black, the electronic device 500 may display the other-than-subview area 930 in substantially the same color as black. The area 940 other than the display 520 may include, e.g., at least a portion of a hole region (e.g., the hole region 540 of FIG. 5B) and/or at least a portion of a remaining region (e.g., the remaining region 550 of FIG. 5B) other than the hole region. As such, since the other-than-subview area 930 in the display 520 is not used for providing separate information (or an image or content) to the user, power consumption of the display 520 may be reduced compared to when the entire display area is used.

Referring to (b) of FIG. 9, the sub-view 920 may be visually clearly provided and power consumption may be reduced due to the other-than-subview area 930 in the display 520 displayed in substantially the same color as the color of the area 940 other than the display 520. Accordingly, it is possible to provide the user with a visual effect as if the electronic device 500 displays a single sub-view 920 on the first surface through the sub display separated in hardware from the main display.

FIG. 10 is a view illustrating a method for an electronic device to display a sub-view according to an embodiment of the disclosure.

The display mode of the embodiment of FIG. 10 may be, e.g., the sub-view display mode of FIG. 6A.

FIG. 10 illustrates a front view of an electronic device 500 in a folded state.

According to an embodiment, the display 520 may be disposed in (or on) a first surface (e.g., the second surface 210b of the first housing 210 of FIG. 2A or the first surface 511 of the first housing 510 of FIG. 5A) of the first housing of the electronic device 500.

Referring to (a) of FIG. 10, the electronic device 500 may display only a sub-view (screen A) 1020 on the display 520 including an active display area (e.g., the active display area 560 of FIG. 5B).

According to an embodiment, the electronic device 500 may display the sub-view 1020 in the second display area (e.g., the second display area 562 of FIG. 5B). In this case, the main view is not displayed in the first display area (e.g., the first display area 561 of FIG. 5B).

According to an embodiment, the electronic device 500 may set the upper line 1021 defining the upper boundary of the sub-view 1020 to be aligned with the first hole border line 1051. For example, the electronic device 500 may set the upper line 1021 of the sub-view 1020 to be aligned with the first hole border line 1051, and the lower line 1022 defining the lower boundary of the sub-view 1020 to be aligned with the second hole border line 1052. The first hole border line 1051 may be, e.g., a border line passing through the uppermost points of two holes (e.g., the camera holes 531 and 532 of FIG. 5B). The second hole border line 1052 may be, e.g., a border line passing through the lowermost points of two holes (e.g., the camera holes 531 and 532 of FIG. 5B). According to an embodiment, the first hole border line 1051 and the second hole border line 1052 may be parallel to the border line 563.

According to an embodiment, the first hole border line 1051 may be aligned with the upper line of the hole region (e.g., the upper line 541 of the hole region 540 of FIG. 5B), and the second hole border line 1052 may be aligned with the lower line of the hole region (e.g., the lower line 542 of the hole region 540 of FIG. 5B).

According to an embodiment, the R values of the four corners of the sub-view 820 may be the same as each other.

As illustrated in (a) of FIG. 10, when only the sub-view 1020 is displayed through one display 520, e.g., it is necessary to process the area 1030 other than the sub-view 1020 in the display 520 to save power consumption. In the disclosure, the area 1030 may be referred to as an other-than-subview area or an outside-the-subview area.

According to an embodiment, the electronic device 500 may display the other-than-subview area 1030 in the display 520 in a designated color.

According to an embodiment, the electronic device 500 may display the other-than-subview area 1030 in the display 520 in substantially the same color as the color of the area 1040 other than the display 520. For example, when the area 1040 other than the display 520 is the printing area (BM) printed in black, the electronic device 500 may display the other-than-subview area 1030 in substantially the same color as black. The area 1040 other than the display 520 may include, e.g., at least a portion of a hole region (e.g., the hole region 540 of FIG. 5B) and/or at least a portion of a remaining region (e.g., the remaining region 550 of FIG. 5B) other than the hole region. As such, since the other-than-subview area 1030 in the display 520 is not used for providing separate information (or an image) to the user, power consumption of the display 520 may be reduced compared to when the entire display area is used.

Referring to (b) of FIG. 10, the sub-view 1020 may be visually clearly provided and power consumption may be reduced due to the other-than-subview area 1030 in the display 520 displayed in substantially the same color as the color of the area 1040 other than the display 520. Accordingly, it is possible to provide the user with a visual effect as if the electronic device 500 displays a single sub-view 1020 on the first surface through the sub display separated in hardware from the main display.

Further, by setting the boundary of the sub-view 1020 to match the hole boundary (e.g., setting the length of the sub-view 1020 in the vertical direction (e.g., the y-axis direction) to be the same as the length of the camera in the vertical direction (e.g., the y-axis direction)), a visual sense of unity between the shape of the sub-view 1020 and the hole placement shape (or the camera placement shape) may be provided. However, by this configuration, the size of the sub-view 1020 of the embodiment of FIG. 10 may be smaller than the size of the sub-view 920 of the embodiment of FIG. 9.

FIG. 11 is a view illustrating a method for an electronic device to display a main view according to an embodiment of the disclosure.

The display mode of the embodiment of FIG. 11 may be, e.g., the main view display mode of FIG. 6A.

FIG. 11 illustrates a front view of an electronic device 500 in a folded state.

According to an embodiment, the display 520 may be disposed in (or on) a first surface (e.g., the second surface 210b of the first housing 210 of FIG. 2A or the first surface 511 of the first housing 510 of FIG. 5A) of the first housing of the electronic device 500.

Referring to (a) of FIG. 11, the electronic device 500 may display only a main view (screen B) 1110 on the display 520 including an active display area (e.g., the active display area 560 of FIG. 5B).

According to an embodiment, the electronic device 500 may display the main view 1110 in a first display area (e.g., the first display area 561 of FIG. 5B). In this case, the sub-view is not displayed in the second display area (e.g., the second display area 562 of FIG. 5B).

According to an embodiment, the electronic device 500 may set a line 1111 (lower line) defining a lower boundary of the main view 1110 to be aligned with the border line 563. Accordingly, the main view 1110 having the maximum size in the first display area may be provided.

According to an embodiment, the R values of the two lower corners of the main view 710 may be the same as each other.

As illustrated in (a) of FIG. 11, when only the main view 1110 is displayed through one display 520, e.g., it is necessary to process the area 1130 other than the main view 1110 in the display 520 to save power consumption. In the disclosure, the area 1130 may be referred to as an other-than-main view area or an outside-the-main view area.

According to an embodiment, the electronic device 500 may display the other-than-main view area 1130 in the display 520 in a designated color.

According to an embodiment, the electronic device 500 may display the other-than-main view area 1130 in the display 520 in substantially the same color as the color of the area 1140 other than the display 520. For example, when the area 1140 other than the display 520 is the printing area (BM) printed in black, the electronic device 500 may display the other-than-main view area 1130 in substantially the same color as black. The area 1140 other than the display 520 may include, e.g., at least a portion of a hole region (e.g., the hole region 540 of FIG. 5B) and/or at least a portion of a remaining region (e.g., the remaining region 550 of FIG. 5B) other than the hole region. As such, since the other-than-main view area 1130 in the display 520 is not used for providing separate information (or an image) to the user, power consumption of the display 520 may be reduced compared to when the entire display area is used.

Referring to (b) of FIG. 11, the main view 1110 may be visually clearly provided and power consumption may be reduced due to the other-than-main view area 1130 in the display 520 displayed in substantially the same color as the color of the area 1140 other than the display 520. Accordingly, it is possible to provide the user with a visual effect as if the electronic device 500 displays a single main view 1110 on the first surface through the main display separated in hardware from the sub display.

FIG. 12 is a view illustrating a method for an electronic device to display a full view according to an embodiment of the disclosure.

The display mode of the embodiment of FIG. 12 may be, e.g., the full display mode of FIG. 6A.

FIG. 12 illustrates a front view of an electronic device 500 in a folded state.

According to an embodiment, the display 520 may be disposed in (or on) a first surface (e.g., the second surface 210b of the first housing 210 of FIG. 2A or the first surface 511 of the first housing 510 of FIG. 5A) of the first housing of the electronic device 500.

Referring to FIG. 12, the electronic device 500 may display one full view (screen C) 1230 on the display 520 including an active display area (e.g., the active display area 560 of FIG. 5B).

According to an embodiment, the electronic device 500 may display the full view 1230 on a display including a notch portion 521a having a first height h1. In this case, the area other than the area in which the full view 1230 is displayed on the display 520 (hereinafter, referred to as an other-than-full view area or an outside-the-full view area) may be displayed in substantially the same color as the color of the area 1240 other than the display 520. For example, when the area 1240 other than the display 520 is the printing area (BM) printed in black, the electronic device 500 may display the area other than the full view in substantially the same color as black. The area 1240 other than the display 520 may include, e.g., at least a portion of a hole region (e.g., the hole region 540 of FIG. 5B) and/or at least a portion of a remaining region (e.g., the remaining region 550 of FIG. 5B) other than the hole region.

According to an embodiment, the electronic device 500 may display the full view 1230 on a display including the notch portion 521a and the notch portion 521b having the second height h1+h2. An example of the display including the notch portion 521a and the notch portion 521b having the second height h1+h2 may be the same as the display 520 of FIG. 5A. As such, the full view 1230 may be provided in a flexible size within the entire active display area. Thus, in certain embodiments, the device may be arranged to adjust the apparent size of the notch portion in response to a user input.

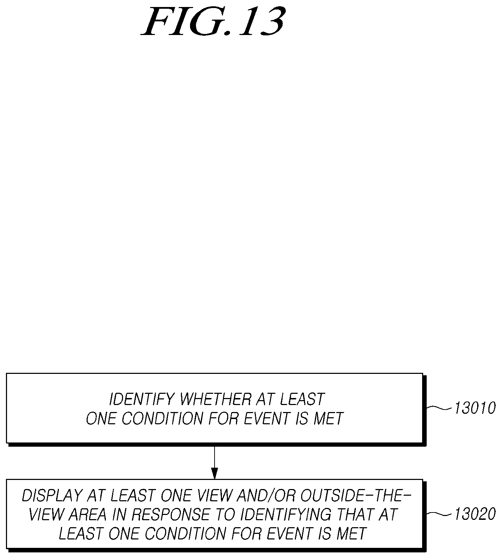

FIG. 13 is a flowchart illustrating a method for an electronic device to display at least one execution screen according to an embodiment of the disclosure.

Referring to FIG. 13, in operation 13010, the electronic device (e.g., the electronic device 500 of FIGS. 5A and 5B) may identify whether at least one condition (designated condition) for an event is met.

According to an embodiment, the event may be associated with a display mode. The display mode may be, e.g., one of the full display mode, the multi-view display mode, the main view display mode, or the sub-view display mode of FIG. 6A.

According to an embodiment, the event may be an event for switching the display mode from the first display mode to the second display mode.

For example, the event may be a first event associated with multi-view display (or multi-view display mode). For example, the first event associated with the multi-view display may be an event for switching from the full display mode to the multi-view display mode. In this case, when it is identified that at least one condition for the first event is met, the electronic device may perform at least one operation for switching from the full display mode to the multi-view display mode (or applying the multi-view display mode).

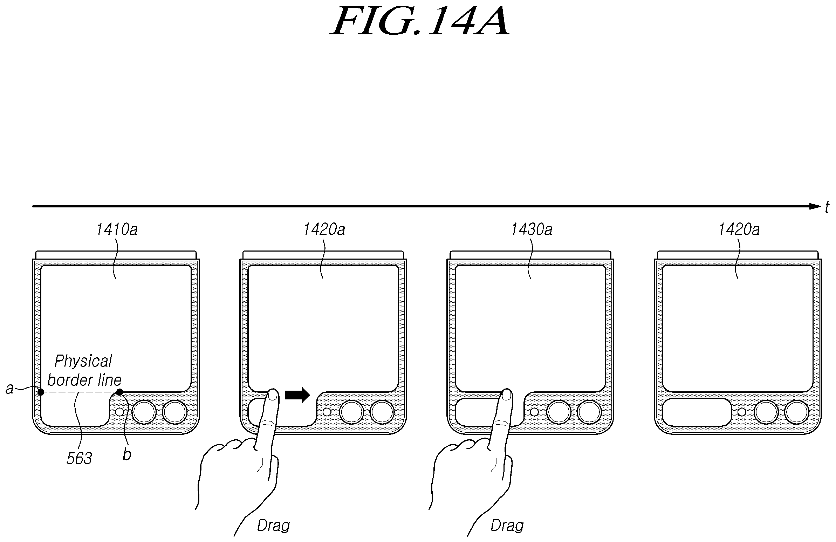

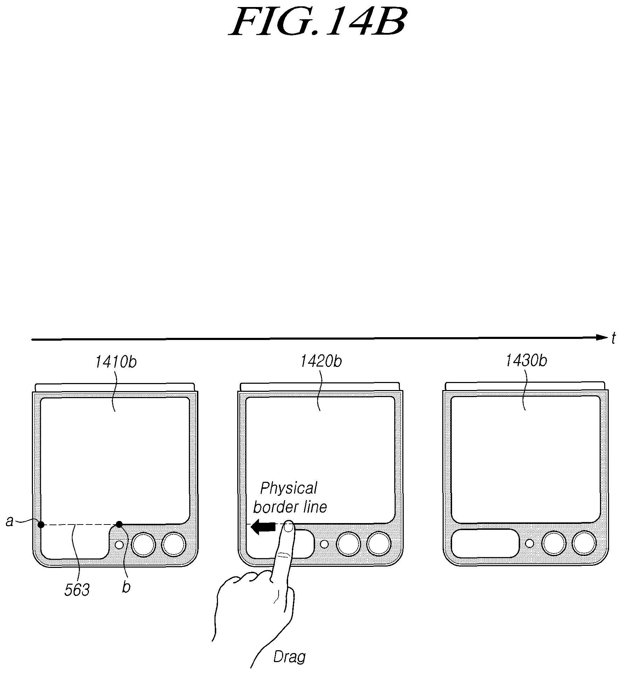

According to an embodiment, the electronic device may identify whether a designated condition for the first event is met, based on a touch input to the first display area (e.g., the first display area 561 of FIG. 5B) or the second display area (e.g., the second display area 562 of FIG. 5B). For example, when the touch input is generated within a designated distance from a boundary where the first display area and the second display area contact each other, the electronic device may identify that the designated condition for the first event is met. Alternatively, when the touch input occurs outside the designated distance from the boundary where the first display area and the second display area contact each other, the electronic device may identify that the designated condition for the first event is not met. For example, when the touch input is a drag input or a swipe input parallel to the length direction (or the horizontal direction or the x-axis direction of the electronic device) of the hole region, the electronic device may identify that the designated condition for the first event is met. For example, when an angle between a virtual straight line connecting a first point (e.g., point a of FIG. 14A or 14B) and a second point (e.g., point b of FIG. 14A or 14B) of the display in which a drag input or a swipe input continues (or is maintained) and a boundary (e.g., the border line 536 in FIG. 5B) between the first display area and the second display area is smaller than a designated angle, the electronic device may identify that the designated condition for the first event is met.

According to an embodiment, while the first view (e.g., the full view or the sub-view or the main view) is displayed through the first display area and/or the second display area, when an event corresponding to another designated application different from the application designated for the first view occurs, the electronic device may identify that the designated condition for the first event is met.

For example, the event may be a second event associated with sub-view display (or sub-view display mode). For example, the second event associated with the sub-view display may be the second event for switching from the multi-view display mode to the sub-display mode. In this case, when it is identified that at least one condition for the second event is met, the electronic device may perform at least one operation for switching from the multi-view display mode to the sub-display mode (or applying the sub-display mode).

According to an embodiment, the electronic device may identify whether a designated condition for the second event is met, based on a touch input to the first display area (e.g., the first display area 561 of FIG. 5B) or the second display area (e.g., the second display area 562 of FIG. 5B). For example, when the touch input occurs within a designated distance from a boundary (e.g., the boundary 563 of FIG. 5B) where the first display area and the second display area contact each other, the electronic device may identify that the designated condition for the second event is met. Alternatively, when the touch input occurs outside the designated distance from the boundary where the first display area and the second display area contact each other, the electronic device may identify that the designated condition for the second event is not met. For example, when the touch input is a drag input or a swipe input parallel to the length direction (or the horizontal direction or the x-axis direction of the electronic device) of the hole region in a state in which the gap area is displayed, the electronic device may identify that the designated condition for the second event is met. For example, when the angle between the virtual straight line connecting the first point (e.g., point a of FIGS. 14A and 14B) and the second point (e.g., point b of FIGS. 14A and 14B) of the display in which the drag input or the swipe input continues (or is maintained) in a state in which the gap area is displayed and the boundary (e.g., the border line 563 in FIG. 5B) between the first display area and the second display area is smaller than the designated angle, the electronic device may identify that the designated condition for the second event is met.

According to an embodiment, when an event of terminating the application designated for the first view occurs while the main view is displayed through the first display area and the sub-view is displayed through the second display area, the electronic device may identify that the designated condition for the second event is met.

In operation 13020, the electronic device may display at least one view and/or the outside-the-view area on the display in response to identifying that at least one condition for the event is met.

For example, when it is identified that at least one condition for the first event for switching from the full display mode to the multi-view display mode is met in a state in which the full display mode is applied, the electronic device may display the main view, the sub-view, and the gap area on the display, e.g., as illustrated in FIGS. 7 and 8. An example of switching from the full display mode to the multi-view display mode is described below with reference to FIGS. 14A and 14B.

For example, when it is identified that at least one condition for the second event for switching from the multi-view display mode to the sub-display mode is met in a state in which the multi-view display mode is applied, the electronic device may display the sub-view and the other-than-subview area on the display, e.g., as illustrated in FIGS. 9 and 10.

FIG. 14A is a view illustrating a method for an electronic device to switch a display mode from a full display mode to a multi-view display mode based on a user input according to an embodiment of the disclosure.

The switch (or transition) of the display mode of the embodiment of FIG. 14A may be, e.g., a switch (or transition) from the full display mode of FIG. 6A to the multi-view display mode.

In the embodiment of FIG. 14A, for convenience of description, it is exemplified that the touch input is a drag input, but the disclosure is not limited thereto. For example, the same embodiment may be applied even when the touch input is a swipe input corresponding to the drag input.

Referring to FIG. 14A, when the full display mode is applied, the electronic device (e.g., the electronic device 500 of FIG. 5A or 5B) may display a first screen 1410a, which is a full view, on the display (e.g., the display 520 of FIG. 5A). An example of the first screen 1410a may be the same as that illustrated in FIG. 12.

According to an embodiment, in a state in which the first screen 1410a is displayed, the electronic device may obtain (or receive) a first drag input for dragging in a first direction (e.g., from left to right) along the border line 536. For example, as illustrated in FIG. 14A, the first drag input may be a touch input of dragging from left to right from point a to point b while the touch is maintained on the display. Points a and b may be, e.g., a left upper end point and a right upper end point, respectively, of a notch portion (e.g., the notch portion 521 of FIG. 5A) of the display.

According to an embodiment, when a first drag input for dragging in the first direction (e.g., from left to right) along the border line 536 is obtained while the first screen 1410a is displayed, the electronic device may identify that at least one condition for the first event for switching from the full display mode to the multi-view display mode is met. For example, when an angle between a virtual straight line connecting point a and point b of the display in which the first drag input is continued (or maintained) and a boundary (or border line 536) between the first display area and the second display area is smaller than a designated angle, the electronic device may identify that the designated condition for the first event is met. In this case, the electronic device may perform at least one operation for switching from the full display mode to the multi-view display mode.

According to an embodiment, in response to obtaining the first drag input (or in response to identifying that at least one condition for the first event for switching from the full display mode to the multi-view display mode is met), as illustrated in FIG. 14A, the electronic device may sequentially display the second screen 1420a, the third screen 1430a, and the fourth screen 1440a on the display. On the second screen 1420a and the third screen 1430a, e.g., a gap area (i.e., a portion of the gap area) showing the context of separation between the main view and the sub-view to the point corresponding to the drag input may be displayed on the display. Through the second screen 1420a and the third screen 1430a, the electronic device may visually show the user that the electronic device is switching from the full display mode to the multi-view display mode. On the fourth screen 1440a, e.g., a completed gap area (e.g., the gap area 730 of FIG. 7) may be displayed on the display. An example of the fourth screen 1440a may be the same as that illustrated in FIGS. 7 and 8.

FIG. 14B is a view illustrating a method for an electronic device to switch a display mode from a full display mode to a multi-view display mode based on a user input according to an embodiment of the disclosure.

The switch (or transition) of the display mode of the embodiment of FIG. 14B may be, e.g., a switch (or transition) from the full display mode of FIG. 6 to the multi-view display mode.

In the embodiment of FIG. 14A, for convenience of description, it is exemplified that the touch input is a drag input, but the disclosure is not limited thereto. For example, the same embodiment may be applied even when the touch input is a swipe input corresponding to the drag input.

Referring to FIG. 14B, when the full display mode is applied, the electronic device (e.g., the electronic device 500 of FIGS. 5A and 5B) may display the first screen 1410b, which is a full view, on the display. An example of the first screen 1401b may be the same as that illustrated in FIG. 12.

According to an embodiment, in a state in which the first screen 1410b is displayed, the electronic device may obtain (or receive) a second drag input for dragging in the second direction (e.g., from right to left) along the physical border line 563. The second drag input of the embodiment of FIG. 14B may be a drag input in a direction opposite to the first drag input of the embodiment of FIG. 14A. For example, as illustrated in FIG. 14B, the second drag input may be a touch input of dragging from point b to point a from right to left while the touch is maintained on the display. Points a and b may be, e.g., a left upper end point and a right upper end point, respectively, of a notch portion (e.g., the notch portion 521 of FIG. 5A) of the display.

According to an embodiment, when the second drag input for dragging in the second direction (e.g., from right to left) along the physical border line 536 is obtained while the first screen 1410b is displayed, the electronic device may identify that at least one condition for the first event for switching from the full display mode to the multi-view display mode is met. In this case, the electronic device may perform at least one operation for switching from the full display mode to the multi-view display mode.

According to an embodiment, in response to obtaining the second drag input (or in response to identifying that at least one condition for the first event for switching from the full display mode to the multi-view display mode is met), as illustrated in FIG. 14B, the electronic device may sequentially display the second screen 1420b and the third screen 1430b on the display. On the second screen 1420b, e.g., a gap area (i.e., a portion of the gap area) to the point corresponding to the drag input may be displayed on the display. Through the second screen 1420b, the electronic device may visually show the user that the electronic device is switching from the full display mode to the multi-view display mode. On the third screen 1430b, e.g., a completed gap area (e.g., the gap area 730 of FIG. 7) may be displayed on the display. An example of the third screen 1430b may be the same as that illustrated in FIGS. 7 and 8. Thus, it will be appreciated from the above description of FIGS. 14A and 14B that certain embodiments enable a user to configure the display into a main area and a separate minor area, which may also be described as an island or separate region, window, or portion. This configuration may be in response to receiving a pre-determined touch and drag input, for example, to split or partition the screen or display, or, in other words, to create a separate island. A user is able to interact with the device to create a partition.

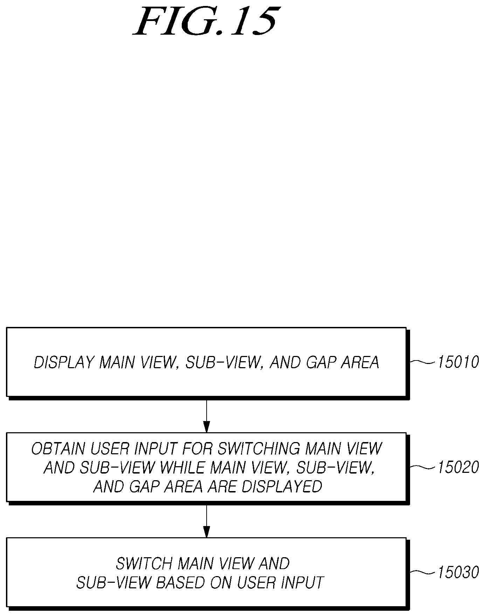

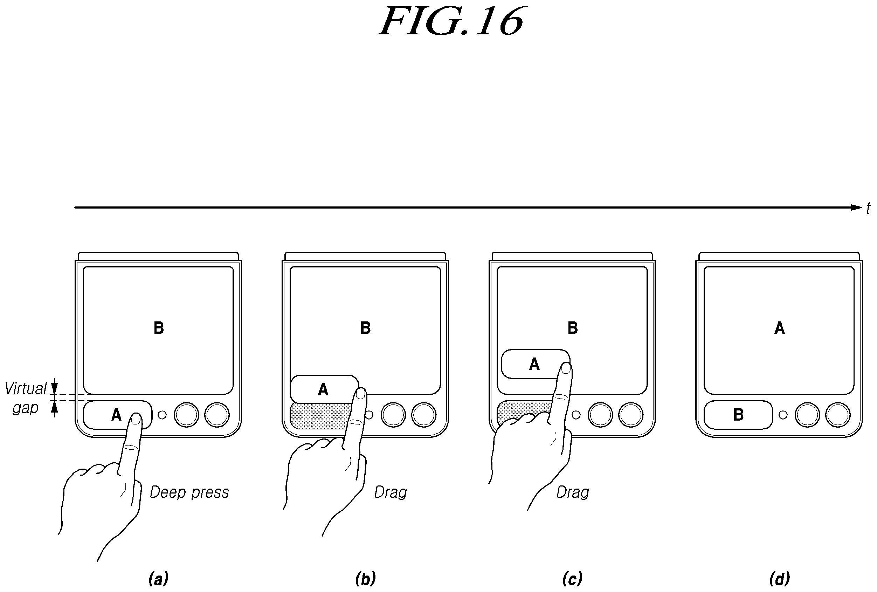

FIG. 15 is a flowchart illustrating a method for an electronic device to switch between a main view and a sub-view according to an embodiment of the disclosure. FIG. 16 is a view illustrating an example of a switching process between a main view and a sub-view according to an embodiment of the disclosure.

In the embodiments of FIGS. 15 and 16, the display mode may be the multi-view display mode.

Referring to FIG. 15, in operation 15010, the electronic device (the electronic device 500 of FIGS. 5A and 5B) may display the main view, the sub-view, and the gap area on the display. For example, as illustrated in FIG. 16A, when the multi-view display mode is applied, the electronic device may display the main view (screen A), the sub-view (screen B), and the gap area on the display. The description of the main view, the sub-view, and the display of the gap area in the multi-view display mode may refer to the description of FIGS. 7 and 8.

In operation 15020, the electronic device may obtain a user input for switching the main view and the sub-view while the main view, the sub-view, and the gap area are displayed. In the disclosure, switching the main view and the sub-view may be referred to as window switching.

In operation 15030, the electronic device may switch the main view and the sub-view based on a user input.

According to an embodiment, as illustrated in (a) of FIG. 16, the electronic device may obtain (or receive) a deep press input to the sub-view (A) in a state in which the main view (B), the sub-view (A), and the gap area are displayed. The deep press input may be, e.g., a touch input of pressing the screen for a preset time or more with a pressure larger than or equal to a preset pressure.

According to an embodiment, the electronic device may set the sub-view to a movable state in response to obtaining a deep press input to the sub-view. For example, in response to objecting the deep press input to the sub-view, the electronic device may identify the sub-view corresponding to the deep press input and set the sub-view to a movable state.

According to an embodiment, as illustrated in (b) of FIG. 16, the electronic device may obtain (or receive) a drag input for dragging the sub-view A in the first direction (e.g., the direction from the second display area in which the sub-view A is displayed to the first display area in which the main view B is displayed) in a state in which the sub-view A is set to the movable state. According to an embodiment, the drag input may be an input crossing a gap area (e.g., the gap area 730 of FIG. 7) or a border line (e.g., the border line 563 of FIG. 5B).

According to an embodiment, the electronic device may move the sub-view A to the first display area in response to obtaining the drag input to the sub-view.

According to an embodiment, as illustrated in (c) of FIG. 16, the electronic device may obtain (or receive) a drop input for dropping the sub-view A in a state in which the sub-view A is moved to the first display area. The drop input may be, e.g., an input for releasing the touch on the screen corresponding to the selected sub-view A.

According to an embodiment, as illustrated in (d) of FIG. 16, the electronic device may switch the main view B and the sub-view A in response to obtaining a drop input to the sub-view A. For example, the electronic device may display the content displayed in the main view B in the second display area, and display the content displayed in the sub-view A in the first display area. Accordingly, the electronic device may provide the user with the content of interest displayed in the existing sub-view A through a larger display area. In this case, the content displayed in the existing main view B may still be provided in a small size through the second display area.

Meanwhile, in the embodiments of FIGS. 15, 16A, and 16B, an embodiment of switching the main view B and the sub-view A by moving the sub-view A to the main view B is described as an example, but vice versa. For example, it is also possible to switch the main view B and the sub-view A by moving the main view B to the sub-view A. For example, the electronic device may select the main view B through a deep press input and move the main view B toward the sub-view A through a drag and drop input, thereby switching the main view B and the sub-view A.

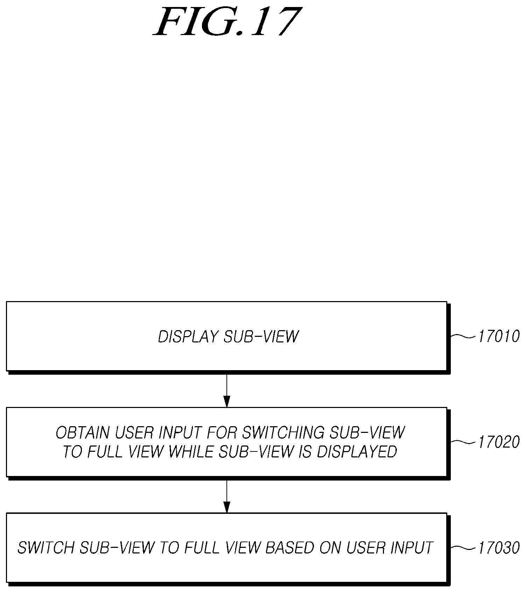

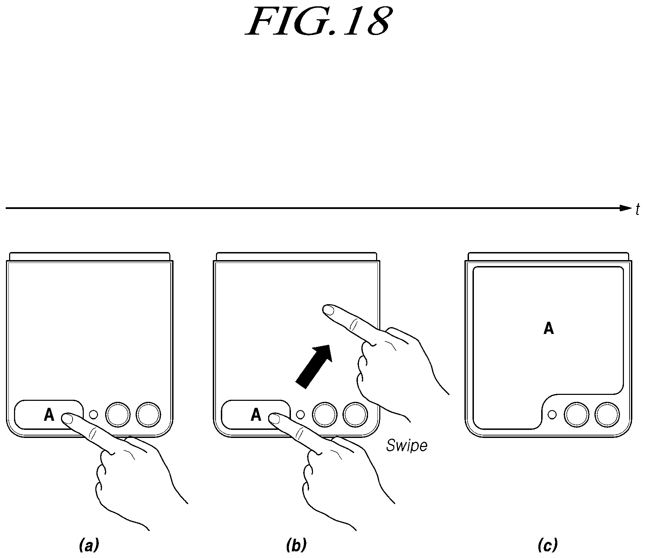

FIG. 17 is a flowchart illustrating a method for an electronic device to switch a display mode from a sub display mode to a full display mode based on a user input according to an embodiment of the disclosure. FIG. 18 is a view illustrating an example of a process of switching from a sub display mode to a full display mode according to an embodiment of the disclosure.

Referring to FIG. 17, in operation 17010, the electronic device may display the sub-view on the display. For example, as illustrated in FIG. 18A, when the sub-view display mode is applied, the electronic device may display the sub-view (screen A) and the other-than-subview area on the display. A description of the display of the sub-view and the other-than-subview area in the sub-view display mode may refer to the description of FIGS. 9 and 10.

In operation 17020, the electronic device may obtain a user input for switching the sub-view to the full view while the sub-view is displayed.

According to an embodiment, as illustrated in FIG. 18(b), in a state in which the sub-view A is displayed, the electronic device may obtain (or receive) a swipe input for swiping the sub-view A in a first direction (e.g., the direction from the second display area in which the sub-view A is displayed to the first display area displayed in the first color). According to an embodiment, the swipe input may be an input crossing a gap area (e.g., the gap area 730 of FIG. 7) or a border line (e.g., the border line 563 of FIG. 5B).

According to an embodiment, in a state in which the sub-view A is displayed, the electronic device may obtain (or receive) a deep press input to the sub-view A and a drag input for dragging the sub-view A in a direction from the second display area in which the sub-view A is displayed to the first display area.

In operation 17030, the electronic device may switch the sub-view to the full view based on a user input (e.g., a swipe input or a deep press and drag input of FIG. 18(b)). According to an embodiment, as illustrated in FIG. 18(c), the electronic device may display the content displayed in the sub-view A on the entire display area in response to obtaining a swipe input. According to an embodiment, in response to obtaining a deep press input and drag input, the electronic device may display the content displayed in the sub-view A on the entire display area. Accordingly, the electronic device may provide the content of interest displayed in the existing sub-view A, to the user, in a larger size, through the entire display area.

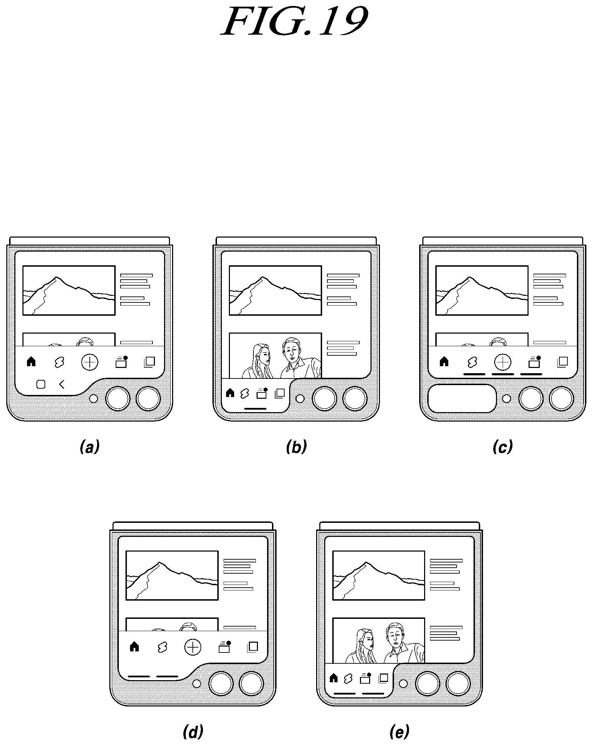

FIG. 19 is a view illustrating an example of a view provided by an electronic device including an extended display according to an embodiment of the disclosure.

In the embodiment of FIG. 19, the extended display may be, e.g., the display 520 of FIG. 5A or 5B.

Referring to (a) and (d) of FIG. 19, the electronic device (e.g., the electronic device 500 of FIG. 5A or 5B) may provide a first full view through a first area in the extended display.

Referring to (b) and (e) of FIG. 19, the electronic device (e.g., the electronic device 500 of FIG. 5A or 5B) may provide a second full view through a second area larger than the first area in the extended display. As illustrated, the second area of (b) and (e) of FIG. 19 may include a notch portion that is further expanded compared to the first area of (a) and (d) of FIG. 19. By using the extended notch portion, the electronic device may display at least some of the control icons (or control objects) displayed in the first display area illustrated in (a) and (d) of FIG. 19 in the notch portion, thereby providing more content in the first display area.

Referring to FIG. 19(c), the electronic device (e.g., the electronic device 500 of FIGS. 5A and 5B) may provide a sub-view through a partial area in a second area larger than a first area in an extended display. As illustrated, the second area of FIG. 19(c) may include a notch portion that is further expanded compared to the first area of FIGS. 19(a) and (d). The expanded notch portion may be large enough to provide a separate sub-view, as illustrated in FIG. 19(c). Accordingly, the electronic device may provide a sub-view separate from the main view through the expanded notch portion.

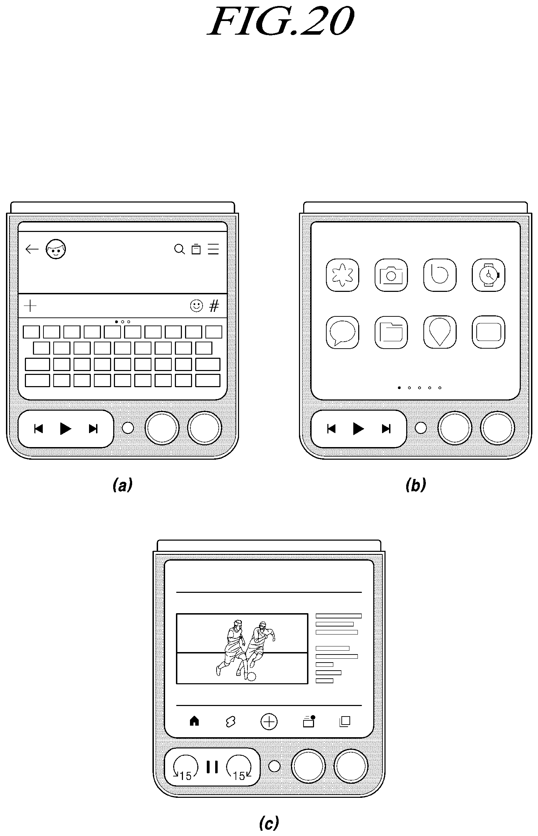

FIG. 20 is a view illustrating an example of a main view and a sub-view provided by an electronic device including an extended display according to an embodiment of the disclosure.

The display mode of the embodiment of FIG. 20 may be, e.g., the multi-view display mode of FIG. 6A.

In the embodiment of FIG. 20, the extended display may be, e.g., the display 520 of FIG. 5A or 5B.

Referring to FIG. 20(a), the electronic device (e.g., the electronic device 500 of FIG. 5A or 5B) may display a main view including an execution screen of a first application (e.g., a text application) through a first display area (e.g., the first display area 561 of FIG. 5B), and may display a sub-view including an execution screen of a second application (e.g., a music application) through a second display area (e.g., the second display area 562 of FIG. 5B). According to an embodiment, the first application associated with the main view may be different from the second application associated with the sub-view.

Referring to FIG. 20(b), the electronic device (e.g., the electronic device 500 of FIGS. 5A and 5B) may display a main view including an execution screen of a first application (e.g., a home screen application) through a first display area, and may display a sub-view including an execution screen of a second application (e.g., a music application) through a second display area. According to an embodiment, the first application associated with the main view may be different from the second application associated with the sub-view.

Referring to FIG. 20(c), the electronic device (e.g., the electronic device 500 of FIGS. 5A and 5B) may display a main view including an execution screen of a first application (e.g., a video application) through a first display area, and may display a sub-view including a control screen of the first application through a second display area. By partitioning the screen into a main view and a separate sub-view, control inputs may be more efficiently and accurately received (via the sub-view), without inadvertently effecting the main view. Certain embodiments may thus provide a more efficient user interface, and/or a technically improved user interface, helping avoid input errors, and the associated additional processing and consumption of power.

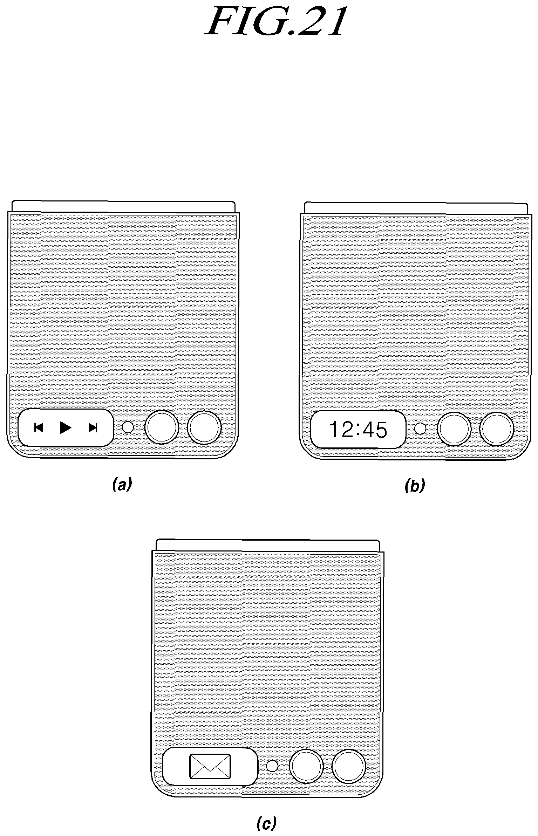

FIG. 21 is a view illustrating an example of a main view and a sub-view provided by an electronic device including an extended display according to an embodiment of the disclosure.

The display mode of the embodiment of FIG. 21 may be, e.g., the sub-view display mode of FIG. 6A.

In the embodiment of FIG. 21, the extended display may be, e.g., the display 520 of FIG. 5A or 5B.

Referring to FIG. 21(a), the electronic device (e.g., the electronic device 500 of FIG. 5A or 5B) may display a sub-view including an execution screen of a first application (e.g., a music application) through a second display area (e.g., the second display area 562 of FIG. 5B).

Referring to FIG. 21(b), the electronic device (e.g., the electronic device 500 of FIG. 5A or 5B) may display a sub-view including an execution screen of a first application (e.g., a clock application) through a second display area.

Referring to FIG. 21(c), the electronic device (e.g., the electronic device 500 of FIG. 5A or 5B) may display a sub-view including an execution screen of a second application (e.g., an e-mail application) through a second display area.

According to an embodiment, when a designated input (e.g., a double tap) is received in the second display area while the sub-view including the execution screen of the second application (e.g., a music application, a clock application, or an e-mail application) is displayed through the second display area, the second application may be displayed in the first display area.

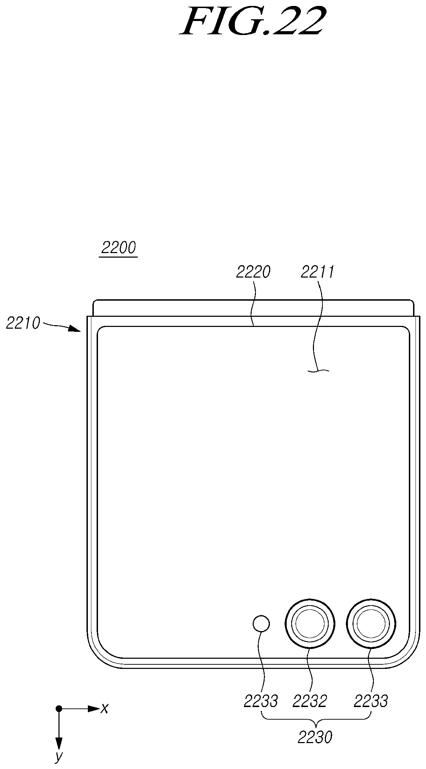

FIG. 22 is a view illustrating a display of an electronic device according to an embodiment.

In the embodiment of FIG. 22, the electronic device 2200 may be, e.g., the electronic device 101 of FIG. 1, the electronic device 200 of FIGS. 2A to 4, or the electronic device 500 of FIGS. 5A to 21. The display 2220 of the electronic device 2200 may be, e.g., the display module 160 of the electronic device 101 of FIG. 1, the display 280 of the electronic device 200 of FIGS. 2A to 4, or the display 520 of the electronic device 500 of FIGS. 5A to 21. In the disclosure, the display 2220 may be referred to as a cover display, an external display, a rear display, or a sub display.

FIG. 22 is a front view of an electronic device 2200 in a folded state.

According to an embodiment, the display 2220 may be activated in the folded state of the electronic device 2200, but is not limited thereto. For example, if necessary, the display 2220 may be activated even when the electronic device 2200 is in the intermediate state or the unfolded state.

According to an embodiment, the display 2220 may be received (or disposed) in (or on) the first housing 2210 (e.g., the first housing 210 of FIG. 2A) of the electronic device 2200.

According to an embodiment, the display 2220 may be disposed on the first surface 2211 (e.g., the second surface 210b of the first housing 510 of FIG. 2A) of the first housing 2210 of the electronic device 2200. According to an embodiment, the first surface 2211 (e.g., the second surface 210b of the first housing 510 of FIG. 2A) on which the display 2220 is disposed may be a surface opposite to the second surface (e.g., the first surface 210a of the first housing 510 of FIG. 2A) on which the flexible display (e.g., the flexible display 230 of FIG. 2A) is disposed. For example, in a state in which the electronic device 2200 is unfolded, the display 2220 may be viewed in the direction (e.g., the -z-axis direction) of the first surface 511 opposite to the direction (e.g., the +z-axis direction) of the second surface on which the flexible display is disposed.

According to an embodiment, unlike the display 520 of FIGS. 5A to 21 having a notch structure, the display 2220 may be a hall punch display (e.g., a display in which a hole is drilled in at least a portion of the display 2220 to dispose a component such as a camera). For example, as illustrated in FIG. 22, the display 2220 may have a structure including at least one hole 2230 (e.g., at least one hole 530 of FIG. 5A) in the lower right corner, but is not limited thereto. For example, at least one hole 2230 may be positioned at a lower left end. In the disclosure, the hole punch display may be referred to as a punch hole display or a camera hole display.

According to an embodiment, as illustrated of FIG. 22, the at least one hole 2230 may include two camera holes 2231 and 2232 (e.g., the camera holes 531 and 532 of FIG. 5A) and/or one flash hole 2233 (e.g., the flash hole 533 of FIG. 5A). Each rear camera module (e.g., the second camera module 208 of FIG. 2B) may be disposed in each of the camera holes 2231 and 2232. A flash (e.g., the flash 209 of FIG. 2B) may be disposed in the flash hole 2233. As described above, in the example of FIG. 22, it is exemplified that two camera holes 2231 and 2232 and one flash hole 2233 are formed in the first surface 2211 of the first housing 2210, but embodiments are not limited thereto, and the number of camera holes and/or the number of flash holes formed in the first surface 2211 of the first housing 2210 may be changed according to the embodiment. For example, one or three or more camera holes may be formed in the first surface 2211 of the first housing 2210. For example, 0 or two or more flash holes may be formed in the first surface 2211 of the first housing 2210.

According to an embodiment, the at least one hole 2230 may be arranged in the first direction. For example, as illustrated of FIG. 22, the flash hole 2233 and the two camera holes 2231 and 2232 may be arranged in the horizontal direction (e.g., the x-axis direction) of the electronic device 2200. For example, the two camera holes 2231 and 2232 may be arranged side by side in the x-axis direction so that a line connecting the uppermost portions (or points) of the two camera holes 2231 and 2232 is parallel to a line connecting the lowermost portions (or points) of the two camera holes 2231 and 2232. For example, the two camera holes 2231 and 2232 and the flash hole 2233 may be arranged side by side in the x-axis direction so that a line passing through the centers of the two camera holes 2231 and 2232 passes through the center of the flash hole 2233. As described above, in the example of FIG. 22, it is exemplified that the two camera holes 2231 and 2232 and the one flash hole 2233 are arranged in the horizontal direction (e.g., the x-axis direction) of the electronic device 2200. However, embodiments are not limited thereto, and the arrangement and/or arrangement structure of the holes may vary according to embodiments. For example, two camera holes may be arranged in the horizontal direction (e.g., the x-axis direction) of the electronic device 2200 of the electronic device 2200, and one of the two camera holes and one flash hole may be arranged in the vertical direction or the length direction (e.g., the y-axis direction) of the electronic device 2200.

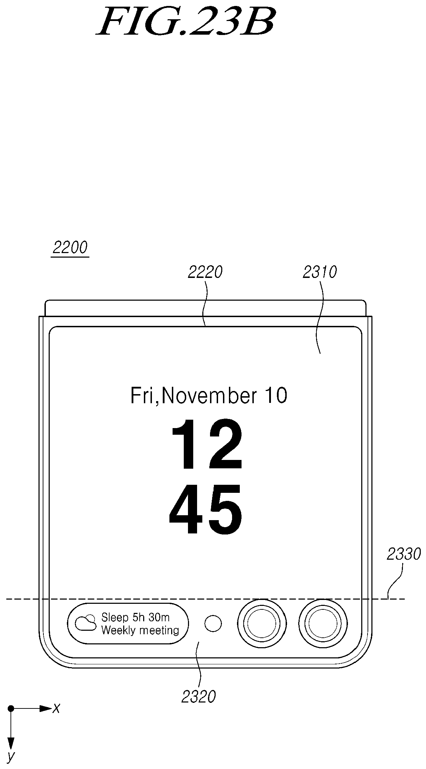

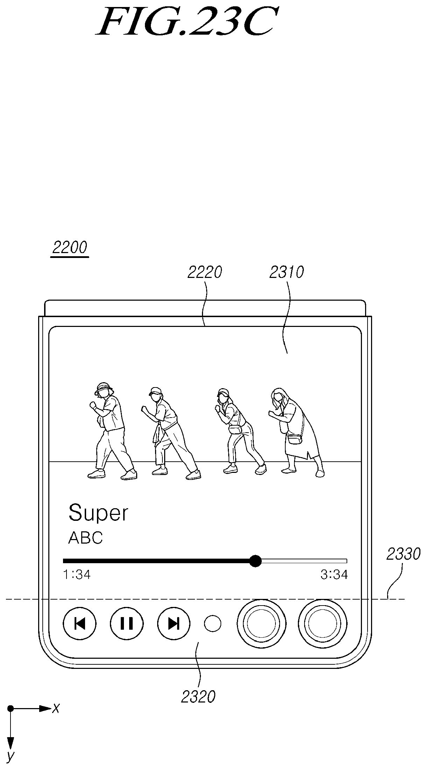

FIGS. 23A, 23B, and 23C are views illustrating a method of displaying a main view and a sub-view together by an electronic device according to an embodiment of the disclosure.

The display mode of the embodiments of FIGS. 23A to 23C may be, e.g., the multi-view display mode of FIG. 6A.

The embodiments of FIGS. 23A to 23C show front views of the electronic device 2200 in the folded state.

According to an embodiment, the display 2220 may be disposed in (or on) a first surface (e.g., the second surface 210b of the first housing 210 of FIG. 2A or the first surface 511 of the first housing 510 of FIG. 5A) of the first housing of the electronic device 2200.

Referring to FIG. 23A, the electronic device 2200 may include a display 2220 including an active display area. According to an embodiment, the active display area of the display 2220 may be divided into a first display area 2310 and a second display area 2320 based on a boundary 2330. The first display area may be an area positioned above the boundary line 2330 in the active display area, and the second display area may be an area positioned below the boundary line 2330 in the active display area.

According to an embodiment, the boundary 2330 may correspond to an upper boundary of at least one hole (e.g., the at least one hole 2230 of FIG. 22). For example, the boundary 2330 may be, e.g., a boundary passing through uppermost points of two holes (e.g., the camera holes 2231 and 2232 of FIG. 22). The boundary 2330 may be aligned with an upper line (e.g., the upper line 541 of the hole region 540 of FIG. 5B) of the hole region (e.g., the hole region 540 of FIG. 5B).

According to an embodiment, the electronic device 2200 may display the main view B and the sub-view A together on the display 2220 including the active display area. According to an embodiment, the main view B and/or the sub-view A may be used for a now bar suggestion and/or a controller interaction associated with the current state. For example, as illustrated of FIG. 23B, the electronic device 2200 may display a main view B displaying time information (e.g., month, day, and time) in the first display area 2310, and may display a sub-view A including schedule and/or alarm information (e.g., weather, sleep time (e.g., 5 hours and 30 minutes sleep), and weekly meeting schedule) in the second display area 2320. For example, as illustrated of FIG. 23C, the electronic device 2200 may display a main view B displaying playback information about music or video content (e.g., a music or video title, a group name, an image (e.g., a skin) associated with the song or video, a length of the song or video, and an indicator/progress bar indicating a current playback time) in the first display area 2310, and display a sub-view A including an interface (e.g., a playback/pause button, a forward/backward skip button) for controlling playback of music or video content in the second display area 2320. According to an embodiment, the size of the sub-view A may be smaller than the size of the main view B.

According to an embodiment, the electronic device 2200 may set a line (lower line) defining a lower boundary (e.g., a boundary in the +y-axis direction) among the boundaries of the main view B and/or a line (upper line) defining an upper boundary (e.g., a boundary in the -y-axis direction) among the boundaries of the sub-view A to be aligned with the boundary 2330. For example, by setting the virtual gap 2340 between the main view B and the sub-view A to 0, the electronic device 2200 may set a line (lower line) defining a lower boundary (e.g., a boundary in the +y-axis direction) among the boundaries of the main view B and a line (upper line) defining an upper boundary (e.g., a boundary in the -y-axis direction) among the boundaries of the sub-view A to be aligned with the boundary 2330. As such, by setting the boundary between the main view B and the sub-view A to match the hole boundary (e.g., the upper boundary), a sense of visual unity may be provided.

Meanwhile, according to an embodiment, the electronic device 2200 may set the virtual gap 2340 to a value larger than 0. In this case, a gap area (e.g., the gap area 830 of FIG. 8) may be set between the main view B and the sub-view A. The electronic device 2200 may display the gap area in substantially the same color as the color of the area other than the display 2220. For example, when the area other than the display 2220 is the printed area BM printed in black, the electronic device 2200 may display the gap area in substantially the same color as black. The area other than the display 2220 may include, e.g., at least a portion of a hole region (e.g., the hole region 540 of FIG. 5B) and/or at least a portion of a remaining area (e.g., the remaining area 550 of FIG. 5B) other than the hole region. As such, the gap area may be used only for color display for visually separating the main view B and the sub-view A, but may not be used for providing separate information (or images, content) to the user. Due to the gap area, it is possible to provide the user with a visual effect as if the electronic device 2200 displays the main view B and the sub-view A, respectively, through two displays separated in hardware.

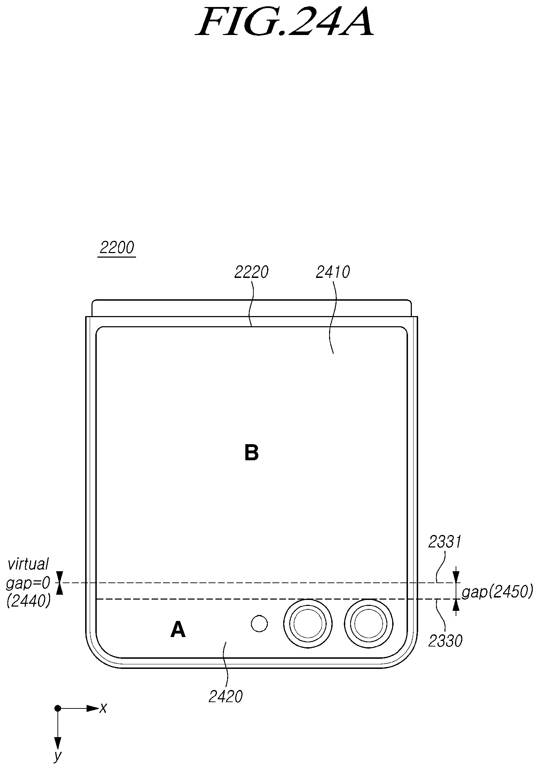

FIGS. 24A and 24B are views illustrating a method of displaying a main view and a sub-view together by an electronic device according to an embodiment of the disclosure.

The display mode of the embodiments of FIGS. 24A and 24B may be, e.g., the multi-view display mode of FIG. 6A.

The embodiments of FIGS. 24A and 24B show front views of the electronic device 2200 in the folded state. Unlike the embodiments of FIGS. 23A to 23C in which a boundary separating the main view B and the sub-view A corresponds to an upper boundary of at least one hole (e.g., the at least one hole 2230 of FIG. 22), in the embodiments of FIGS. 24A and 24B, a boundary separating the main view B and the sub-view A may have a gap 2450 having a designated size from an upper boundary of at least one hole (e.g., the at least one hole 2230 of FIG. 22). Accordingly, a sub-view having a larger size may be provided.

According to an embodiment, the display 2220 may be disposed in (or on) a first surface (e.g., the second surface 210b of the first housing 210 of FIG. 2A or the first surface 511 of the first housing 510 of FIG. 5A) of the first housing of the electronic device 2200.

Referring to FIG. 24A, the electronic device 2200 may include a display 2220 including an active display area. According to an embodiment, the active display area of the display 2220 may be divided into a first display area 2410 and a second display area 2420 with respect to a second boundary 2331. The first display area may be an area positioned above the second boundary 2331 of the active display area, and the second display area may be an area positioned below the boundary 2331 of the active display area.

According to an embodiment, the second boundary 2331 may have a gap 2450 from the first boundary 2330, which is an upper boundary of at least one hole (e.g., the at least one hole 2230 of FIG. 22). For example, the second boundary 2331 may have a gap 2450 from the first boundary 2330 passing through the uppermost points of two holes (e.g., the camera holes 2231 and 2232 of FIG. 22), and may be a boundary parallel to the first boundary 2330. The first boundary 2330 may be aligned with an upper line (e.g., the upper line 541 of the hole region 540 of FIG. 5B) of the hole region (e.g., the hole region 540 of FIG. 5B).

According to an embodiment, the electronic device 2200 may display the main view B and the sub-view A together on the display 2220 including the active display area. For example, as illustrated of FIG. 24B, the electronic device 2200 may display the main view B for displaying the gallery image(s) in the first display area 2410 and may display the sub-view A in the second display area 2320. According to an embodiment, the size of the sub-view A may be smaller than the size of the main view B. According to an embodiment, the main view B and/or the sub-view A may be used for AI agent interaction.

According to an embodiment, the electronic device 2200 may set a line (lower line) defining a lower boundary (e.g., a boundary in the +y-axis direction) among the boundaries of the main view B and/or a line (upper line) defining an upper boundary (e.g., a boundary in the -y-axis direction) among the boundaries of the sub-view A to be aligned with the second boundary 2331. For example, by setting the virtual gap 2440 between the main view B and the sub-view A to 0, the electronic device 2200 may set a line (lower line) defining a lower boundary (e.g., a boundary in the +y-axis direction) among the boundaries of the main view B and a line (upper line) defining an upper boundary (e.g., a boundary in the -y-axis direction) among the boundaries of the sub-view A to be aligned with the second boundary 2331. As such, by setting the boundary between the main view B and the sub-view A above the hole boundary (e.g., the upper boundary), the size of the sub-view A may be increased.

Meanwhile, according to an embodiment, the electronic device 2200 may set the virtual gap 2440 to a value larger than 0. In this case, a gap area (e.g., the gap area 830 of FIG. 8) may be set between the main view B and the sub-view A. The electronic device 2200 may display the gap area in substantially the same color as the color of the area other than the display 2220. For example, when the area other than the display 2220 is a printed area BM printed in black, the electronic device 2200 may display the gap area in substantially the same color as black. The area other than the display 2220 may include, e.g., at least a portion of a hole region (e.g., the hole region 540 of FIG. 5B) and/or at least a portion of a remaining area (e.g., the remaining area 550 of FIG. 5B) other than the hole region. As such, the gap area may be used only for color display for visually separating the main view B and the sub-view A, but may not be used for providing separate information (or images, content) to the user. Due to this gap area, it is possible to provide the user with a visual effect as if the electronic device 2200 displays the main view B and the sub-view A, respectively, through two displays separated in hardware.

According to an embodiment, an electronic device 101, 200, or 500 may include a first housing 210.

According to an embodiment, the electronic device 101, 200, or 500 may include a foldable housing including a first housing 210 and a second housing 220. A first surface of the first housing may include a hole region 540 including one or more holes.

According to an embodiment, the electronic device 101, 200, or 500 may include a hinge structure 240 rotatably connecting the first housing and the second housing from an unfolded state to a folded state.

According to an embodiment, the electronic device 101, 200, or 500 may include a flexible display 230 accommodated in the first housing and the second housing. According to an embodiment, a first surface 511 (e.g., the second surface 210b of the first housing 510 of FIG. 2A) on which a cover display 280 or 520 is disposed may be a surface opposite to a second surface (e.g., the first surface 210a of the first housing 510 of FIG. 2A) on which the flexible display (e.g., the flexible display 230 of FIG. 2A) is disposed. The flexible display may be disposed to be visible in a direction of the second surface opposite to the first surface when the foldable housing is unfolded.

According to an embodiment, the electronic device 101, 200, or 500 may include a cover display 280 or 520 accommodated in the first housing. The cover display may be disposed to be visible toward the first surface. The cover display may include an active display area 560 viewed to an outside of the electronic device through at least a portion of a remaining region 550 other than the hole region of the first surface, and the active display area may include a first display area 561 and a second display area 562 smaller than the first display area. The second display area 562 may protrude (or extend) in a first direction (e.g., the +y axis direction of FIG. 5B) with respect to the first display area 561.

According to an embodiment, the electronic device 101, 200, or 500 may include a sensor 180 or 208 accommodated in the first housing and configured to receive an optical signal from the outside.

According to an embodiment, the electronic device 101, 200, or 500 may include a processor 120 and memory 130.

According to an embodiment, the memory may store at least one instruction that, when executed by the processor, enables the electronic device to identify whether a designated condition for a first event associated with multi-view display is met, display a first view having a first size in the first display area based on the designated condition being met, display a second view having a second size smaller than the first size in the second display area, and display a gap area with a first color between the first view and the second view.

According to an embodiment, the gap area may be configured to be displayed so that the first display area in which the first view is displayed and the second display area in which the second view is displayed are seen as if two displays are physically separated from each other.

According to an embodiment, the first color of the gap area may be set to be substantially the same as the second color of the hole region.

According to an embodiment, the first display area may be formed in a first direction with respect to the hole region, and the second display area may be formed in a second direction substantially perpendicular to the first direction with respect to the hole region.

According to an embodiment, the first display area and the second display area may be configured to be divided by a border line aligned with a portion of a line defining a boundary of the active display area, a lower boundary of the first view may be configured to be aligned with the border line, and the gap area may be configured to be positioned below the border line.

According to an embodiment, the at least one instruction, when executed by the processor, enables the electronic device to: configure an upper boundary of the second view to be aligned with an upper boundary of the hole region, and a lower boundary of the second view to be aligned with a lower boundary of the hole region.

According to an embodiment, the at least one instruction, when executed by the processor, enables the electronic device to: based on identifying that a designated condition for a second event associated with sub-view display is met while the first view, the second view, and the gap area are displayed, display an upper boundary of the second view to be aligned with the border line, and display the first display area in the first color without displaying the first view.

According to an embodiment, displaying the gap area may include configuring a size of the first view displayed in the first display area or a size of the second view displayed in the second display area to be reduced by a width of the gap area.

According to an embodiment, the at least one instruction, when executed by the processor, enables the electronic device to: based on identifying that a first condition associated with the designated condition is met, display a vertical length of the gap area as a first length and, based on identifying that a second condition associated with the designated condition is met, display the vertical length of the gap area as a second length different from the first length.

According to an embodiment, the at least one instruction, when executed by the processor, enables the electronic device to: align a lower boundary of the gap area with an upper boundary of the hole region.

According to an embodiment, the at least one instruction, when executed by the processor, enables the electronic device to: identify whether the designated condition is met, based on a touch input to the first display area or the second display area.

According to an embodiment, the at least one instruction, when executed by the processor, enables the electronic device to: when the touch input occurs within a designated distance from a boundary where the first display area and the second display area contact, identify that the designated condition is met and, when the touch input occurs outside the designated distance, identify that the designated condition is not met.

According to an embodiment, the at least one instruction, when executed by the processor, enables the electronic device to: When the touch input is a drag input or a swipe input parallel to a length direction of the hole region, identify that the designated condition is met.

According to an embodiment, the at least one instruction, when executed by the processor, enables the electronic device to: adjust the vertical length of the gap area based on at least some of a strength, a speed, a duration, or a touch area corresponding to the touch input.

According to an embodiment, the at least one instruction, when executed by the processor, enables the electronic device to: when an angle between a virtual straight line connecting a first point and a second point of the display in which the drag input or the swipe input continues and the boundary is smaller than a designated angle, identify that the designated condition is met.

According to an embodiment, the at least one instruction, when executed by the processor, enables the electronic device to: when an event corresponding to another designated application different from an application designated for the first view occurs while the first view is displayed through the first display area and the second display area, identify that the designated condition is met.

According to an embodiment, the at least one instruction, when executed by the processor, enables the electronic device to: when the other designated application is a first application, display the vertical length of the gap area as a first length and, when the other designated application is a second application different from the first application, display the vertical length of the gap area as a second length different from the first length.

According to an embodiment, a method by an electronic device 101, 200, or 500 may include identifying whether a designated condition for a first event associated with multi-view display is met.

According to an embodiment, the method by the electronic device 101, 200, or 500 may include displaying a first view having a first size in the first display area, displaying a second view having a size smaller than the first size in the second display area, and displaying a gap area having a first color between the first view and the second view, based on the designated condition being met.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Meanwhile, although specific embodiments of the disclosure have been described above, various changes may be made thereto without departing from the scope of the disclosure.

Thus, the scope of the disclosure should not be limited to the above-described embodiments, and should rather be defined by the following claims and equivalents thereof.

Effects obtainable from the disclosure are not limited to the above-mentioned effects, and other effects not mentioned may be apparent to one of ordinary skill in the art from the following description.

## Claims

1. An electronic device (101; 200; 500) comprising:
a first housing (210), a first side of the first housing including a hole region (540) including one or more holes;
a cover display (280;520) accommodated in the first housing, wherein the cover display includes an active display area (560) visible to an outside of the electronic device through at least a portion of a remaining region (550) other than the hole region of the first side, wherein the active display area includes a first display area (561) and a second display area (562) protruding in a first direction with respect to the first display, and wherein the second display area is smaller than the first display area;
a processor (120); and
memory (130), wherein the memory stores instructions that, when executed by the processor, cause the electronic device to:
identify whether a specified condition for a first event associated with multi-view display is met; and
based on the specified condition being met, display a first view having a first size in the first display area, a second view having a second size smaller than the first size in the second display area, and a gap area with a first color between the first view and the second view.

2. The electronic device of claim 1, further comprising:
a foldable housing including the first housing (210) and a second housing (220);
a hinge structure (240) rotatably connecting the first housing and the second housing from an unfolded state to a folded state;
a flexible display (230) accommodated in the first housing and the second housing; and
a sensor (180; 208) accommodated in the first housing, and configured to receive an optical signal from the outside.

3. The electronic device of claim 1 or 2,
wherein the first color of the gap area is set to be substantially the same as a second color of the hole region.

4. The electronic device of any one of claims 1 to 3,
wherein the first display area is formed in the first direction with respect to the hole region, and the second display area is formed in a second direction substantially perpendicular to the first direction with respect to the hole region.

5. The electronic device of any one of claims 1 to 4,
wherein the first display area and the second display area are configured to be separated by a border line aligned with a portion of a line defining a boundary of the active display area, and
wherein a lower boundary of the first view is set to be aligned with the border line, and the gap area is configured to be located below the border line.

6. The electronic device of any one of claims 1 to 5, wherein the instructions, when executed by the processor, cause the electronic device to:
configure an upper boundary of the second view to be aligned with an upper boundary of the hole region, and a lower boundary of the second view to be aligned with a lower boundary of the hole region.

7. The electronic device of any one of claims 1 to 6, wherein the instructions, when executed by the processor, cause the electronic device to:
based on identifying that a specified condition for a second event associated with sub-view display is met while the first view, the second view, and the gap area are displayed, display an upper boundary of the second view to be aligned with the border line and display the first display area with the first color without displaying the first view.

8. The electronic device of any one of claims 1 to 7,
wherein displaying the gap area includes configuring a size of the first view displayed in the first display area or a size of the second view displayed in the second display area to be reduced by a width of the gap area.

9. The electronic device of any one of claims 1 to 8, wherein the instructions, when executed by the processor, cause the electronic device to:
based on identifying that a first condition associated with the designated condition is met, display a vertical length of the gap area as a first length; and
based on identifying that a second condition associated with the designated condition is met, display the vertical length of the gap area as a second length different from the first length.

10. The electronic device of any one of claims 1 to 9, wherein the instructions, when executed by the processor, cause the electronic device to:
configure a lower boundary of the gap area to be aligned with the upper boundary of the hole region.

11. The electronic device of any one of claims 1 to 10, wherein the instructions, when executed by the processor, cause the electronic device to:
identify whether the designated condition is met based on a touch input to the first display area or the second display area.

12. A method by an electronic device (101; 200; 500), the electronic device including:
a first housing (210), a first side of the first housing including a hole region (540) including one or more holes;
a cover display (280;520) accommodated in the first housing, wherein the cover display includes an active display area (560) visible to an outside of the electronic device through at least a portion of a remaining region (550) other than the hole region of the first side, wherein the active display area includes a first display area (561) and a second display area (562) protruding in a first direction with respect to the first display, and wherein the second display area is smaller than the first display area, the method comprising:
identifying whether a specified condition for a first event associated with multi-view display is met; and
based on the specified condition being met, displaying a first view having a first size in the first display area, a second view having a size smaller than the first size in the second display area, and a gap area with a first color between the first view and the second view.

13. The method of claim 12,
wherein the first color of the gap area is set to be substantially the same as a second color of the hole region.

14. The method of claim 12 or 13,
wherein the first display area is formed in the first direction with respect to the hole region, and the second display area is formed in a second direction substantially perpendicular to the first direction with respect to the hole region.

15. The method of any one of claims 12 to 14,
wherein the first display area and the second display area are configured to be separated by a border line aligned with a portion of a line defining a boundary of the active display area, and
wherein a lower boundary of the first view is set to be aligned with the border line, and the gap area is configured to be located below the border line.
